# EUROPEAN PATENT APPLICATION

(11) **EP 4 832 590 A1**
(43) Date of publication of application: **28.10.2026**
(21) Application number: 23962021.4
(22) Date of filing: 22.12.2023
(51) Int. Cl.: H04W 52/02

(54) **INDICATION INFORMATION SENDING METHOD AND APPARATUS**

(71) Applicant: Beijing Xiaomi Mobile Software Co., Ltd., Beijing 100085 (CN)
(72) Inventor: LIU, Yunfeng, Beijing 100085 (CN); WANG, Lei, Beijing 100085 (CN)
(74) Representative: Stöckeler, Ferdinand
(86) International application number: PCT/CN2023/141270
(87) International publication number: WO 2025/129699

(57) **Abstract**

Provided in the present disclosure are an indication information sending method and apparatus, and a device and a storage medium. The method comprises: when determining that a network device is in a network energy saving (NES) state, sending first indication information to the network device by at least one of the following means, wherein the first indication information is used for requesting a downlink signal and/or a downlink channel: sending the first indication information to the network device on the basis of a PRACH signal; and sending the first indication information to the network device on the basis of other signals in random access. By means of the present disclosure, an indication information sending mechanism can be provided when it is determined that the network device is in an NES state, such that the network device can perform sending on the basis of the requirements of a terminal, thereby reducing resource waste caused by periodic sending of a downlink signal and/or a downlink channel, and improving the utilization efficiency of resources.

## Description

### TECHNICAL FIELD

The present disclosure relates to the field of communication technology, and in particular to a method for sending indication information, an apparatus, a device, and a storage medium.

### BACKGROUND

In a communication system, a user may perform data transmission and exchange relying on network. As data transmission volume increases, the energy consumed for data transmission gradually increases. Therefore, network energy saving gradually becomes a focus of user attention. For example, semi-persistent configuration of time domain positions may reduce energy consumed by a network device.

### SUMMARY

The present disclosure proposes a method for sending indication information, an apparatus, a device, and a storage medium, to provide a mechanism for sending indication information when it is determined that a network device is in a Network Energy Saving (NES) state, enabling the network device to send according to the needs of a terminal, reducing resource waste caused by periodic sending of downlink signals and/or downlink channels, and improving resource utilization efficiency.

According to a first aspect of the embodiments of the present disclosure, a method for sending indication information, performed by a terminal, is proposed, the method comprising: determining that a network device is in a Network Energy Saving (NES) state, and sending first indication information to the network device via at least one of: sending the first indication information to the network device based on a Physical Random Access Channel (PRACH) signal; or sending the first indication information to the network device based on another signal in random access, wherein the first indication information is configured to request a downlink signal and/or a downlink channel.

According to a second aspect of the embodiments of the present disclosure, a method for receiving indication information, performed by a network device, is proposed, the method comprising: receiving first indication information sent by a terminal via at least one of: receiving the first indication information sent by the terminal based on a Physical Random Access Channel (PRACH) signal; or receiving the first indication information sent by the terminal based on another signal in random access; wherein the first indication information is sent by the terminal when the terminal determines that the network device is in a Network Energy Saving (NES) state, and is configured to request a downlink signal and/or a downlink channel; and sending the downlink signal and/or downlink channel corresponding to the first indication information to the terminal.

According to a third aspect of the embodiments of the present disclosure, a terminal is proposed, comprising: a transceiver module, configured to determine that a network device is in a Network Energy Saving (NES) state, and send first indication information to the network device via at least one of: sending the first indication information to the network device based on a Physical Random Access Channel (PRACH) signal; or sending the first indication information to the network device based on another signal in random access, wherein the first indication information is configured to request a downlink signal and/or a downlink channel.

According to a fourth aspect of the embodiments of the present disclosure, a network device is proposed, comprising: a transceiver module, configured to receive first indication information sent by a terminal via at least one of: receiving the first indication information sent by the terminal based on a Physical Random Access Channel (PRACH) signal; or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel, wherein the transceiver module is further configured to send the downlink signal and/or downlink channel corresponding to the first indication information to the terminal.

According to a fifth aspect of the embodiments of the present disclosure, a terminal is proposed, comprising: one or more processors, wherein the terminal is configured to execute the method for sending indication information according to any one of the first aspect.

According to a sixth aspect of the embodiments of the present disclosure, a network device is proposed, comprising: one or more processors, wherein the network device is configured to execute the method for receiving indication information according to any one of the second aspect.

According to a seventh aspect of the embodiments of the present disclosure, a communication system is proposed, comprising a terminal and a network device, wherein the network device is configured to implement the method for sending indication information according to any one of the first aspect, and the network device is configured to implement the method for receiving indication information according to any one of the second aspect.

According to an eighth aspect of the embodiments of the present disclosure, a storage medium is proposed, the storage medium storing instructions that, when executed on a communication device, cause the communication device to execute the method for sending indication information according to any one of the first aspect or the method for receiving indication information according to any one of the second aspect.

### BRIEF DESCRIPTION OF THE DRAWINGS

The above and/or additional aspects and advantages of the present disclosure may become apparent and easily understood from the description of embodiments in conjunction with the drawings below.
FIG. 1 is a schematic diagram of a communication system according to an embodiment of the present disclosure.
FIG. 2A is an example illustration of an on-demand Synchronization Signal and physical broadcast channel block (SSB) or a System Information Block (SIB) 1 according to an embodiment of the present disclosure.
FIG. 2B is an example illustration of a time-frequency position of a Transmission Occasion (RO) according to an embodiment of the present disclosure.
FIG. 2C is an example illustration of an SSB-RO mapping according to an embodiment of the present disclosure.
FIG. 2D is an example illustration of an SSB-RO mapping according to an embodiment of the present disclosure.
FIG. 2E is an example illustration of an association pattern period according to an embodiment of the present disclosure.
FIG. 3A is a flowchart of a method for sending indication information according to an embodiment of the present disclosure.
FIG. 3B illustrates a schematic diagram of a specific preamble in a specific valid RO for requesting a network device to send an SSB and/or an SIB1 according to an embodiment of the present application.
FIG. 3C illustrates a time-frequency position of an RO in a random access channel configuration (RACH configuration) #2 according to an embodiment of the present disclosure.
FIG. 3D is an interaction schematic diagram of a method for sending indication information according to an embodiment of the present disclosure.
FIG. 3E is an interaction schematic diagram of a method for sending indication information according to an embodiment of the present disclosure.
FIG. 3F is an interaction schematic diagram of a method for sending indication information according to an embodiment of the present disclosure.
FIG. 3G is an interaction schematic diagram of a method for sending indication information according to an embodiment of the present disclosure.
FIG. 4A is a flowchart of a method for sending indication information according to an embodiment of the present disclosure.
FIG. 5A is a flowchart of a method for sending indication information according to an embodiment of the present disclosure.
FIG. 6A is a flowchart of a method for sending indication information according to an embodiment of the present disclosure.
FIG. 7A is a block diagram of a terminal according to an embodiment of the present disclosure.
FIG. 7B is a block diagram of a network device according to an embodiment of the present disclosure.
FIG. 8A is a block diagram of a communication device according to an embodiment of the present disclosure.
FIG. 8B is a block diagram of a chip according to an embodiment of the present disclosure.

### DETAILED DESCRIPTION

The present disclosure proposes a method for sending indication information, an apparatus, a device, and a storage medium, to provide a mechanism for sending indication information when it is determined that a network device is in a Network Energy Saving (NES) state, enabling the network device to send according to the needs of a terminal, reducing resource waste caused by periodic sending of downlink signals and/or downlink channels, and improving resource utilization efficiency.

According to a first aspect of the embodiments of the present disclosure, a method for sending indication information, performed by a terminal, is proposed, the method comprising: determining that a network device is in a Network Energy Saving (NES) state, and sending first indication information to the network device via at least one of: sending the first indication information to the network device based on a Physical Random Access Channel (PRACH) signal; or sending the first indication information to the network device based on another signal in random access, wherein the first indication information is configured to request a downlink signal and/or a downlink channel.

In the above embodiment, when it is determined that the network device is in the NES state, a mechanism for sending indication information is provided, enabling the network device to send according to the needs of the terminal, reducing resource waste caused by periodic sending of downlink signals and/or downlink channels, saving resources, improving resource utilization efficiency, and improving data transmission efficiency.

Based on some embodiments of the first aspect, in some embodiments, sending the first indication information to the network device based on another signal in random access comprises: sending a first random access request to the network device, wherein the first random access request comprises an information element, and the information element is configured to request the downlink signal and/or the downlink channel.

In the above embodiment, when it is determined that the network device is in the NES state, a mechanism for sending indication information is provided. The downlink signal and/or the downlink channel may be requested through the information element carried in the first random access request, which can improve the accuracy of the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, sending the first random access request to the network device comprises: in 4-step random access, sending a message 3 (MSG3) scheduled by a Random Access Response (RAR) to the network device, wherein the MSG3 carries the information element.

In the above embodiment, when it is determined that the network device is in the NES state, a mechanism for sending indication information is provided. In the 4-step random access, the downlink signal and/or downlink channel can be requested through the information element in the MSG3 scheduled by the RAR, which can improve the accuracy of the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, sending the first random access request to the network device comprises: in 2-step random access, sending a message A (MSGA) to the network device, wherein the MSGA carries the information element.

In the above embodiment, when it is determined that the network device is in the NES state, a mechanism for sending indication information is provided. In the 2-step random access, the downlink signal and/or downlink channel can be requested through the information element in the MSGA, which can improve the accuracy of the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, the information element comprises at least one of: a first bit, wherein the first bit indicates requesting the network device to send a Synchronization Signal and physical broadcast channel block (SSB) and a System Information Block 1 (SIB1); a second bit, wherein the second bit indicates requesting the network device to send at least one of an SSB or an SIB1; second indication information, wherein the second indication information indicates at least one of: whether a requested SSB is a simplified SSB, or whether system information and/or other common signals are transmitted only when there is a change, wherein the system information comprises at least one of an SIB1 or a System Information Block n (SIBn), and the other common signals are common signals other than the SIB1 and the SIBn, n being a positive integer greater than 1; third indication information, wherein the third indication information indicates a beam used by the network device to send the downlink signal and/or the downlink channel; fourth indication information, wherein the fourth indication information indicates a number of transmissions of the downlink signal and/or the downlink channel sent by the network device; or fifth indication information, wherein the fifth indication information indicates a minimum time interval between a reception time point for receiving the downlink signal and/or the downlink channel and a transmission time point of the first indication information.

Based on some embodiments of the first aspect, in some embodiments, the information element comprises the third indication information, and the third indication information indicates at least one of: in 4-step random access, the beam used by the network device being a first beam corresponding to an MSG3; in 2-step random access, the beam used by the network device being a second beam corresponding to an MSGA; in 4-step random access, the beam used by the network device comprising the first beam corresponding to a first beam index and valid beams among n beams before and after the first beam index, wherein n is an integer greater than or equal to zero; in 2-step random access, the beam used by the network device comprising the second beam corresponding to a second beam index and valid beams among n beams before and after the second beam index; or in 4-step random access or 2-step random access, a direction of the beam used by the network device comprises all beam directions of SSB.

Based on some embodiments of the first aspect, in some embodiments, sending the first indication information to the network device based on another signal in random access comprises: sending a second random access request to the network device, wherein the second random access request comprises a specific preamble in a specific valid transmission occasion (valid RO), and the specific preamble is configured to request the downlink signal and/or the downlink channel.

In the above embodiments, when it is determined that the network device is in the NES state, a mechanism for sending indication information is provided. The downlink signal and/or downlink channel is requested by including the specific preamble in the specific valid RO in the random access request, which can improve the accuracy of the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, the specific valid transmission occasion comprises all transmission occasions or part of transmission occasions.

Based on some embodiments of the first aspect, in some embodiments, the method further comprises: selecting one first association period every N2 association periods, and selecting one or more valid ROs in the first association period, wherein N2 is a positive integer greater than or equal to 1; and selecting one association pattern period every N1 association pattern periods, selecting one second association period every N3 association periods within the one association pattern period, and selecting one or more valid ROs in the second association period, wherein N1 is a positive integer greater than or equal to 1, and N3 is a positive integer greater than or equal to 1.

In the above embodiments, a mechanism for determining the valid RO is provided, which can improve the accuracy of valid RO determination, improve the accuracy of transmission of request for the downlink signal and/or the downlink channel, improve the accuracy of the network device to send according to the needs of the terminal, and reduce resource waste caused by periodic sending of downlink signals and/or downlink channels, saving resources, and improving resource utilization efficiency.

Based on some embodiments of the first aspect, in some embodiments, the specific preamble comprises all preambles of or part of preambles within one RO.

Based on some embodiments of the first aspect, in some embodiments, sending the first indication information to the network device based on another signal in random access comprises: sending the first indication information to the network device using a valid RO and a preamble in a second random access channel configuration (RACH configuration #2), wherein the RACH configuration #2 is configured by the network device for requesting the downlink signal and/or the downlink channel.

In the above embodiments, when it is determined that the network device is in the NES state, a mechanism for sending indication information is provided. The downlink signal and/or downlink channel is requested using the valid RO and the preamble in the second RACH configuration #2, which can improve the accuracy of the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, a time-frequency position of an RO in the second RACH configuration #2 is different from a time-frequency position of an RO in a first random access channel configuration (RACH configuration #1), and the first RACH configuration #1 is configured by the network device for random access.

Based on some embodiments of the first aspect, in some embodiments, the time-frequency positions being different comprises at least one of: a time domain position of the RO in the second RACH configuration #2 being the same as a time domain position of the RO in the first RACH configuration #1, and a frequency domain position in the second RACH configuration #2 being different from a frequency domain position in the first RACH configuration #1; a time domain position of the RO in the second RACH configuration #2 being different from a time domain position of the RO in the first RACH configuration #1, and a frequency domain position in the second RACH configuration #2 being the same as a frequency domain position in the first RACH configuration #1; or a time domain position of the RO in the second RACH configuration #2 being different from a time domain position of the RO in the first RACH configuration #1, and a frequency domain position in the second RACH configuration #2 being different from a frequency domain position in the first RACH configuration #1.

Based on some embodiments of the first aspect, in some embodiments, a time-frequency position of an RO in the second RACH configuration #2 is the same as a time-frequency position of an RO in a first RACH configuration #1.

Based on some embodiments of the first aspect, in some embodiments, the time-frequency positions being the same comprises a preamble used in the second RACH configuration #2 being different from a preamble used in the first RACH configuration #1.

Based on some embodiments of the first aspect, in some embodiments, sending the first indication information to the network device based on another signal in random access comprises: sending the first indication information to the network device using a specific preamble of a specific valid RO, wherein the specific valid RO is a RO among residual valid ROs in a first RACH configuration #1, the first RACH configuration #1 is configured by the network device for random access, and the residual valid ROs are valid ROs whose part of or all preambles are not used for random access after mapping valid ROs and preambl es to SSBs in an association pattern period.

In the above embodiments, when it is determined that the network device is in the NES state, a mechanism for sending indication information is provided. The downlink signal and/or downlink channel is requested using the specific preamble of the specific valid RO, which can improve the accuracy of the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, sending the first indication information to the network device comprises: sending the first indication information to the network device using a specific preamble of a specific valid RO in a predefined third random access channel configuration (RACH configuration #3).

Based on some embodiments of the first aspect, in some embodiments, before sending the first indication information to the network device based on the PRACH signal, the method further comprises: configuring the PRACH signal for sending the first indication information with at least one of the following parameters being different from that of a PRACH signal used for random access: preamble target received power; or preamble power ramping step.

Based on some embodiments of the first aspect, in some embodiments, sending the first indication information to the network device based on the PRACH signal comprises: sending the first indication information to the network device using the PRACH signal for sending the first indication information at a full power.

Based on some embodiments of the first aspect, in some embodiments, sending the first indication information to the network device comprises: the terminal being in an radio resource control-connected (RRC-CONNECTED) state, sending the first indication information to a first cell, wherein the first indication information is configured to request a second cell to send the requested downlink signal and/or the downlink channel.

In the above embodiments, when it is determined that the network device is in the NES state, a mechanism for sending indication information when the terminal is in the RRC-CONNECTED state is provided, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, the downlink signal comprises at least one of: an SSB; an SIB1; an SIBn, wherein n is a positive integer greater than 1; or another common signal, wherein the other common signal is a common signal other than the SIB1 and the SIBn.

Based on some embodiments of the first aspect, in some embodiments, the downlink channel comprises at least one of: a Physical Broadcast Channel (PBCH); a Physical Downlink Control Channel (PDCCH); or a Physical Downlink Shared Channel (PDSCH).

Based on some embodiments of the first aspect, in some embodiments, the method further comprises: receiving an indication signal sent by the network device, wherein the indication signal indicates a sub-state used by the network device; or receiving an indication signal sent by the network device, wherein the indication signal indicates whether the network device is in the NES state and/or a specific sub-state used when the network device is in the NES state and/or a specific sub-state used when the network device is in a non-NES state.

In the above embodiments, the indication signal is sent to the terminal, which can improve the accuracy of the terminal determining whether the network device is in the NES state, and improve the accuracy of sending the requested downlink signal and/or downlink channel, enabling the network device to send according to the needs of the terminal, reducing resource waste caused by periodic sending of downlink signals and/or downlink channels, saving resources, and improving resource utilization efficiency.

Based on some embodiments of the first aspect, in some embodiments, the specific sub-state used when the network device is in the NES state is a sub-state in a first sub-state set, the first sub-state set comprises at least one of: a first sub-state, wherein the first sub-state is a state of not sending an SSB, not sending an SIB1, not sending an SIBn, and not sending another common signal, wherein n is a positive integer greater than 1; a second sub-state, wherein the second sub-state is a state of not sending an SSB, sending an SIB1, not sending an SIBn, and not sending another common signal; a third sub-state, wherein the third sub-state is a state of sending an SSB, not sending an SIB1, not sending an SIBn, and not sending another common signal; a fourth sub-state, wherein the fourth sub-state is a state of not sending an SSB, not sending an SIB1, sending an SIBn, and not sending another common signal; a fifth sub-state, wherein the fifth sub-state is a state of not sending an SSB, sending an SIB1, sending an SIBn, and not sending another common signal; a sixth sub-state, wherein the sixth sub-state is a state of sending an SSB, not sending an SIB1, sending an SIBn, and not sending another common signal; a seventh sub-state, wherein the seventh sub-state is a state of not sending an SSB, not sending an SIB1, not sending an SIBn, and sending another common signal; an eighth sub-state, wherein the eighth sub-state is a state of not sending an SSB, sending an SIB1, not sending an SIBn, and sending another common signal; a ninth sub-state, wherein the ninth sub-state is a state of sending an SSB, not sending an SIB1, not sending an SIBn, and sending another common signal; a tenth sub-state, wherein the tenth sub-state is a state of not sending an SSB, not sending an SIB1, sending an SIBn, and sending another common signal; an eleventh sub-state, wherein the eleventh sub-state is a state of not sending an SSB, sending an SIB1, sending an SIBn, and sending another common signal; or a twelfth sub-state, wherein the twelfth sub-state is a state of sending an SSB, not sending an SIB1, sending an SIBn, and sending another common signal.

Based on some embodiments of the first aspect, in some embodiments, the specific sub-state used when the network device is in the non-NES state comprises: a thirteenth sub-state, wherein the thirteenth sub-state is a state of sending an SSB, sending an SIB1, sending an SIBn (n>1), and sending another common signal.

Based on some embodiments of the first aspect, in some embodiments, the indication signal comprises a first number of bits, the first number corresponds to a number of sub-states in the first sub-state set.

According to a second aspect of the embodiments of the present disclosure, a method for receiving indication information, performed by a network device, is proposed, the method comprising: receiving first indication information sent by a terminal via at least one of: receiving the first indication information sent by the terminal based on a Physical Random Access Channel (PRACH) signal; or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel; and sending the downlink signal and/or downlink channel corresponding to the first indication information to the terminal.

In the above embodiment, when it is determined that the network device is in the NES state, a mechanism for receiving indication information is provided, enabling the network device to send according to the needs of the terminal, reducing resource waste caused by periodic sending of downlink signals and/or downlink channels, saving resources, improving resource utilization efficiency, and improving data transmission efficiency.

Based on some embodiments of the second aspect, in some embodiments, receiving the first indication information sent by the terminal based on another signal in random access comprises: receiving a first random access request sent by the terminal, wherein the first random access request comprises an information element, and the information element is configured to request the downlink signal and/or the downlink channel.

Based on some embodiments of the second aspect, in some embodiments, receiving the first indication information sent by the terminal based on another signal in random access comprises: receiving a second random access request sent by the terminal, wherein the second random access request comprises a specific preamble in a specific valid transmission occasion (valid RO), and the specific preamble is configured to request the downlink signal and/or the downlink channel.

Based on some embodiments of the second aspect, in some embodiments, receiving the first indication information sent by the terminal based on another signal in random access comprises: receiving the first indication information sent by the terminal using a valid RO and a preamble in a second random access channel configuration (RACH configuration #2), wherein the RACH configuration #2 is configured by the network device for requesting the downlink signal and/or the downlink channel.

Based on some embodiments of the second aspect, in some embodiments, receiving the first indication information sent by the terminal based on another signal in random access comprises: receiving the first indication information sent by the terminal using a specific preamble of a specific valid RO, wherein the specific valid RO is a RO among residual valid ROs in a first random access channel configuration (RACH configuration #1), and the first RACH configuration #1 is configured by the network device for random access.

Based on some embodiments of the second aspect, in some embodiments, receiving the first indication information sent by the terminal based on another signal in random access comprises: receiving the first indication information sent by the terminal using a specific preamble of a specific valid RO in a predefined third random access channel configuration (RACH configuration #3).

Based on some embodiments of the second aspect, in some embodiments, the method further comprises: sending an indication signal to the terminal, wherein the indication signal indicates a sub-state used by the network device.

According to a third aspect of the embodiments of the present disclosure, a terminal is proposed, comprising: a transceiver module, configured to determine that a network device is in a Network Energy Saving (NES) state, and send first indication information to the network device via at least one of: sending the first indication information to the network device based on a Physical Random Access Channel (PRACH) signal; or sending the first indication information to the network device based on another signal in random access, wherein the first indication information is configured to request a downlink signal and/or a downlink channel.

According to a fourth aspect of the embodiments of the present disclosure, a network device is proposed, comprising: a transceiver module, configured to receive first indication information sent by a terminal via at least one of: receiving the first indication information sent by the terminal based on a Physical Random Access Channel (PRACH) signal; or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel, wherein the transceiver module is further configured to send the downlink signal and/or downlink channel corresponding to the first indication information to the terminal.

According to a fifth aspect of the embodiments of the present disclosure, a terminal is proposed, comprising: one or more processors, wherein the terminal is configured to execute the method for sending indication information according to any one of the first aspect.

According to a sixth aspect of the embodiments of the present disclosure, a network device is proposed, comprising: one or more processors, wherein the network device is configured to execute the method for receiving indication information according to any one of the second aspect.

According to a seventh aspect of the embodiments of the present disclosure, a communication system is proposed, comprising a terminal and a network device, wherein the network device is configured to implement the method for sending indication information according to any one of the first aspect, and the network device is configured to implement the method for receiving indication information according to any one of the second aspect.

According to an eighth aspect of the embodiments of the present disclosure, a storage medium is proposed, the storage medium storing instructions that, when executed on a communication device, cause the communication device to execute the method for sending indication information according to any one of the first aspect or the method for receiving indication information according to any one of the second aspect.

Embodiments of the present disclosure propose a method for sending indication information and a method for receiving indication information. In some embodiments, terms such as method for sending indication information, method for receiving indication information, information processing method, communication method, etc., can be interchanged. Terms such as apparatus for sending indication information, apparatus for receiving indication information, information processing apparatus, communication apparatus, etc., can be interchanged. Terms such as information processing system, communication system, etc., can be interchanged.

The embodiments of the present disclosure are not exhaustive, but merely illustrate some embodiments, and shall not be construed as limiting the protection scope of the present disclosure. Where not contradictory, each step in a certain embodiment may be implemented as an independent embodiment, and the steps may be combined arbitrarily. For example, a solution after removing some steps from a certain embodiment can also be implemented as an independent embodiment, and the order of steps in a certain embodiment can be arbitrarily exchanged. Furthermore, optional implementations in a certain embodiment may be arbitrarily combined. Moreover, various embodiments may be arbitrarily combined, for example, some or all steps of different embodiments may be arbitrarily combined, and one embodiment may be arbitrarily combined with optional implementations of another embodiment.

In the embodiments of the present disclosure, unless otherwise specified or logically contradictory, terms and/or descriptions between embodiments are consistent and may be mutually referenced, and technical features in different embodiments can be combined to form new embodiments according to their inherent logical relationships.

The terms used in the embodiments of the present disclosure are only for the purpose of describing specific embodiments and are not intended as limitations of the present disclosure.

In the embodiments of the present disclosure, unless otherwise specified, elements expressed in singular form, such as "a," "an," "the," "said," "above," "aforementioned," "this," etc., can mean "one and only one" or can mean "one or more," "at least one," etc. For example, when using articles such as "a," "an," "the" in English are used in translation, the noun following the article may be understood as a singular expression or a plural expression.

In the embodiments of the present disclosure, "multiple" means two or more.

In some embodiments, terms such as "at least one of," "one or more," "a plurality of," "multiple" can be interchanged.

In some embodiments, expressions such as "at least one of A, B," "A and/or B," "in one case A, in another case B," "in response to one case A, in response to another case B", etc., may include the following technical solutions depending on the situation: in some embodiments A (A is performed regardless of B); in some embodiments B (B is performed regardless of A); in some embodiments selecting from A and B for execution (A and B are selectively executed); in some embodiments A and B (both A and B are executed). Similar applies when there are more branches like A, B, C, etc.

In some embodiments, expressions such as "A or B," etc., may include the following technical solutions depending on the situation: in some embodiments A (A is performed regardless of B); in some embodiments B (B is performed regardless of A); in some embodiments selecting from A and B for execution (A and B are selectively executed). Similar applies when there are more branches such as A, B, C.

Prefix words such as "first," "second," etc., in the embodiments of the present disclosure are only used to distinguish different described objects and do not constitute limitation the position, order, priority, quantity, or content of the described objects. For the statements regarding the described objects, reference may be made to the claims or the context description in the embodiments, and should not be construed as unnecessary limitations due to the use of prefixes. For example, if the described object is "field", then ordinal numbers before "field" in "first field" and "second field" do not limit the position or order between the "fields", "first" and "second" do not limit whether the modified "fields" are in the same message, nor do they limit the order of the "first field" and "second field". As another example, if the described object is "level", then the ordinal numbers before "level" in "first level" and "second level" do not limit the priority between the "levels". As another example, the number of described objects is not limited by ordinal numbers and may be one or more. Taking "first apparatus" as an example, the number of "apparatuses" may be one or more. Furthermore, objects modified by different prefixes may be the same or different. For example, if the described object is "apparatus", then the "first apparatus" and the "second apparatus" may be the same apparatus or different apparatuses, and their types may be the same or different. As another example, if the described object is "information", then the "first information" and the "second information" may be the same information or different information, and their content may be the same or different.

In some embodiments, "comprising A", "including A", "used to indicate A", "carrying A" can be interpreted as directly carrying A or indirectly indicating A.

In some embodiments, terms such as "in response to...", "in response to determining...", "in the case of...", "when...", "while...", "if...", "provided that..." may be interchangeable.

In some embodiments, terms such as "greater than", "greater than or equal to", "not less than", "more than", "more than or equal to", "not fewer than", "higher than", "higher than or equal to", "not lower than", "above" may be interchangeable, and terms such as "less than", "less than or equal to", "not greater than", "fewer than", "fewer than or equal to", "not more than", "lower than", "lower than or equal to", "not higher than", "below" may be interchangeable.

In some embodiments, an apparatus or a device, etc., may be interpreted as physical or virtual, and its name is not limited to those recorded in the embodiments. In some embodiments, it may be understood as "apparatus", "equipment", "device", "circuit", "network element", "node", "function", "unit", "section", "system", "network", "chip", "chip system", "entity", "subject", etc.

In some embodiments, "network" may be interpreted as a device included in the network, such as an access network device, a core network device, etc.

In some embodiments, an "access network device (AN device)" may also be called a "radio access network device (RAN device)", a "base station (BS)", a "radio base station", or a "fixed station." In some embodiments, it may also be understood as a "node", an "access point", a "transmission point (TP)," a "reception point (RP)", a "transmission/reception point (TRP)", a "panel", an "antenna panel", an "antenna array", a "cell", a "macro cell", a "small cell", a "femto cell", a "pico cell", a "sector", a "cell group", a "serving cell", a "carrier", a "component carrier", or a "bandwidth part (BWP)," etc.

In some embodiments, a "terminal" or a "terminal device" may be called "user equipment (UE)", a "user terminal", a "mobile station (MS)", a "mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, etc.

In some embodiments, acquisition of data, information, etc., may comply with the laws and regulations of the country where they are located.

In some embodiments, data, information, etc., may be obtained after obtaining user consent.

Furthermore, each element, each row, or each column in a table of the embodiments of the present disclosure may be implemented as an independent embodiment, and any combination of elements, rows, or columns may also be implemented as an independent embodiment.

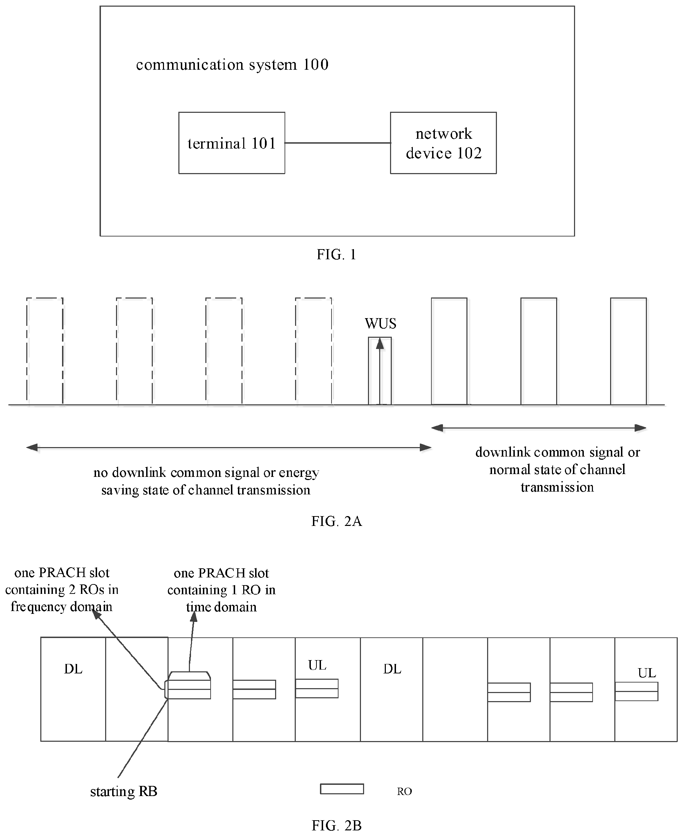

FIG. 1 is a schematic diagram of a communication system according to an embodiment of the present disclosure. As shown in FIG. 1, a communication system 100 includes a terminal 101 and a network device 102.

In some embodiments, the terminal 101 includes, for example, at least one of a mobile phone, a wearable device, an Internet of Things device, a car with a communication capability, a smart car, a tablet (Pad), a computer with a wireless transceiver capability, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, but is not limited thereto.

In some embodiments, the network device 102 may include, for example, at least one of an access network device or a core network device.

In some embodiments, the access network device is, for example, a node or device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a network device in a 6th generation mobile networks (6G) communication system, an Open RAN network device, a Cloud RAN network device, a network device in other communication systems, an access node in a Wi-Fi system, but is not limited thereto.

In some embodiments, the technical solution of the present disclosure may be applied to an Open RAN architecture. In this case, the interfaces between or within access network devices involved in the embodiments of the present disclosure may become internal interfaces of the Open RAN, and the processes and information interactions between these internal interfaces may be implemented through software or programs.

In some embodiments, the access network device may consist of a central unit (CU) and distributed units (DUs). The CU may also be called a control unit. Using a CU-DU structure, a protocol layer of the access network device may be split, with some protocol layer functions placed in the CU for centralized control, and part or all of the remaining protocol layer functions distributed in the DUs, the DUs being centrally controlled by the CU, but is not limited thereto.

In some embodiments, the core network device may be a single device, including one or more network elements, or may be multiple devices or device groups, respectively including all or part of the one or more network elements. The network elements may be virtual or physical. The core network includes, for example, at least one of an Evolved Packet Core (EPC), a 5G Core Network (5GCN), or a Next Generation Core (NGC).

In some embodiments, the core network device may be a single device, including a first network element, a second network element, etc., or may be multiple devices or device groups, respectively including all or part of the first network element, second network element, etc. The network elements may be virtual or physical. The core network includes, for example, at least one of an Evolved Packet Core (EPC), a 5G Core Network (5GCN), or a Next Generation Core (NGC).

In some embodiments, the first network element is, for example, a Policy Control Function (PCF).

In some embodiments, the first network element is used to "support a unified policy framework to manage network behavior, provide policy rules to a network entity for implementation and execution, and access subscription information of a Unified Data Repository (UDR)," and the name is not limited thereto.

In some embodiments, the second network element is, for example, a Unified Data Management (UDM) function.

In some embodiments, the second network element is used for "management of user identification, subscription data, and authentication data, and service network element registration management of users," and the name is not limited thereto.

In some embodiments, the third network element is, for example, an Authentication Server Function (AUSF).

In some embodiments, the third network element is used to "receive a request for authenticating a terminal from an Access and Mobility Management Function (AMF), request a key from the UDM, and forward the key issued by the UDM to the AMF for authentication processing," and the name is not limited thereto.

In some embodiments, the third network element may be independent of the core network device.

In some embodiments, the third network element may be part of the core network device.

It is understandable that the communication system described in the embodiments of the present disclosure is to clearly illustrate the technical solutions of the embodiments of the present disclosure and does not constitute a limitation on the technical solutions disclosed in the embodiments of the present disclosure. Those skilled in the art may appreciate that as the system architecture evolves and new service scenarios emerge, the technical solutions proposed in the embodiments of the present disclosure are also applicable to similar technical problems.

The following embodiments of the present disclosure may be performed by the communication system 100 shown in FIG. 1, or part of the entities, but are not limited thereto. The entities shown in FIG. 1 are examples. The communication system may include all or part of the entities in FIG. 1, or may include other entities not shown in FIG. 1. The number and form of each entity are arbitrary. Each entity may be physical or virtual. The connection relationships between entities are examples. The entities may be connected with each other or not. The connection may be any form, direct or indirect, wired or wireless.

The embodiments of the present disclosure may be applied to Long Term Evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN), a Device-to-Device (D2D) system, a Machine to Machine (M2M) system, an Internet of Things (IoT) system, Vehicle-to-Everything (V2X), a system utilizing other communication methods, or a next-generation system based on extensions thereof, etc. Furthermore, multiple systems may be combined (e.g., LTE or LTE-A combined with 5G, etc.) for application.

In an embodiment of the present disclosure, development of Network Energy Saving (NES) technology becomes increasingly rapid. To reduce energy consumption of a network device, research on NES is carried out in some embodiments. In some embodiments, full evaluation is performed on the NES technology in the time, frequency, spatial, and power domains in the research phase, and some technologies in the time, spatial, and power domains are standardized in the standardization phase.

In New Radio (NR), a time domain position of an SSB/SIB1/cell common PDCCH/PRACH transmission occasion is semi-statically configured. The periodic transmission of common signals (SSB/SIB1/cell common PDCCH) or periodic reception (PRACH) may limit a network device's ability to use (deeper) sleep modes for energy saving. Therefore, the time domain technique aims to increase the sleep time of the network device by limiting the transmission/reception of common signals, thereby achieving energy saving.

On-demand SSB/SIB1 technology among time domain techniques is one of the important technologies. In the on-demand SSB/SIB1 technology, SSB/SIB1 is no longer sent periodically, but is sent based on a requirement of a terminal supporting an NES function (NES terminal). A specific process is shown in FIG. 2A.

In some embodiments, the network device stops periodically sending SSB/SIB1 (in an NES state) and does not explicitly notify the NES terminal that the network is in the NES state.

In some embodiments, when the NES terminal requires SSB/SIB1, it sends indication information for requesting the SSB and/or SIB1 to the network device, which may be referred to as a Wake Up Signal (WUS)/request signal. After receiving the request for the SSB and/or SIB1, the network device sends the SSB/SIB1 after a certain delay (enters a non-NES state), and stops sending SSB/SIB1 (returns to the NES state) after sending one or more SSB bursts.

In some embodiments, the NES terminal assumes that the network device periodically sends SSB/SIB1, and the NES terminal receives SSB/SIB1 at the configured time-frequency positions. When the network device uses on-demand SSB/SIB1 technology, the NES terminal needs to determine whether the network device is in the NES state, and then send indication information for requesting SSB and/or SIB1 to obtain SSB/SIB1. When the network device enters the NES state and the NES terminal determines that the network device is in the NES state, a solution of embodiments of the present disclosure may be, for example, sending indication information for requesting SSB and/or SIB1 to the network device based on a PRACH signal or another signal in random access (RA), to enable the network device to determine that the NES terminal requests SSB and SIB1, and enable the application of on-demand SSB/SIB1 technology.

In some embodiments, random access technology is applicable to legacy terminals and NES terminals. When initially accessing a cell in an idle state, the terminal measures information such as received signal strength of SSB beams and selects an optimal SSB beam. In a direction of the optimal SSB beam, it sends a PRACH signal on an RO (Random Access Channel Occasion) for random access. Furthermore, in other states, the terminal may also send a PRACH signal on an RO for random access. Random access includes CBRA (Contention-Based Random Access) and CFRA (Contention-Free Random Access). In CBRA, there may be multiple terminals using the same preamble, meaning that the PRACH signals of two terminals collide, leading to random access failure.

In some embodiments, regarding configuration of the number of random access preambles, it may be configured according to an index rach-ConfigCommon -> totalNumberOfRA-Preambles / RACH-ConfigCommonTwoStepRA -> totalNumberOfRA-Preambles for 2-step random access, where a total number of RA preambles (total Number Of RA-Preambles) indicates a number (N_total) of preambles used for random access. If it is not configured, N_total may be, for example, 64.

In some embodiments, the time domain position of the RO may be determined according to the following parameters. It is determined based on an index: rach-ConfigCommon -> RACH-ConfigGeneric -> prach-ConfigurationIndex and Table 6.3.3.2-2 in 3GPP TS 38.211, where RACH-ConfigGeneric is an RACH (Random Access Channel) generic configuration.

An example is as follows: when prach-ConfigurationIndex is 118, a relationship with Table 6.3.3.2-2 in 3GPP TS 38.211 is:
PRACH configuration index: prach-ConfigurationIndex configured in RRC;
preamble format: using preamble format A3;
nf mod x = y: a configuration period of ROs (PRACH configuration period) is x = 2 frames, and an RO is on an odd frame (y=1) within the 2 frames;
subframe number: ROs are on subframes 2, 3, 4, 7, 8, 9 within the odd frame;
starting Symbol: a starting symbol of the RO within a subframe is 0;
number of PRACH slots within a subframe: a number of PRACH slots within a subframe is 1 (the subframe length is 1ms, the corresponding SCS (Subcarrier Spacing) is 15KHz, in this case, the PRACH slot length is 1ms, SCS is 15KHz);
number of time-domain PRACH occasions within a PRACH slot: in the time domain, one PRACH slot contains 2 ROs;
PRACH duration: one RO symbol length: 6 symbols.

In some embodiments, frequency domain of the RO is determined according to the following parameters:
rach-ConfigCommon -> RACH-ConfigGeneric
   -> msg1-FDM ENUMERATED {one, two, four, eight},
   -> msg1-FrequencyStart INTEGER (0..maxNrofPhysicalResourceBlocks-1),
where msg1-FDM is frequency division multiplexing of MSG1; msg1-FDM: the number of ROs in one PRACH slot in the frequency domain; msg1-FrequencyStart: a starting RB (resource block) in the frequency domain;
determining the bandwidth occupied by one RO according to the preamble format.

In some embodiments, an example of a time-frequency configuration of an RO is shown in FIG. 2B, including: ROs being on subframes #2, 3, 4, 7, 8, 9; in the time domain, one PRACH slot containing 1 RO, and a symbol range of a first RO being OS#0~5 within one subframe; in the frequency domain, one PRACH slot containing 2 ROs.

In some embodiments, the time-frequency resource location of the RO may be determined according to higher layer signaling configuration and a protocol default table. In some embodiments, whether a RO is a valid RO may be determined according to certain criteria, which is not limited in the embodiments of the present disclosure. There is a certain mapping relationship between SSBs and valid ROs, as follows.

Case 1: When multiple SSBs are associated with one valid RO, the multiple SSBs associated with valid RO #n are distinguished by preambles. Based on the time-frequency location of the valid RO and a preamble sent by the terminal, the network device may determine that the optimal beam of the terminal corresponds to SSB #m. An configuration, for example, may be: ssb-perRACH-OccasionAndCB-PreamblesPerSSB CHOICE { four 16}. For example, it indicates that N=4 SSBs are mapped to 1 valid RO, one SSB includes R=16 preambles, and a starting index of a preamble of the n-th SSB in one valid RO is n * N_total/N (i.e., n * R).

In some embodiments, there are 12 valid ROs in the PRACH configuration period, included in subframes 2, 3, 4, 7, 8, 9.

There are 20 SSBs in total. N=4 SSBs are mapped to 1 valid RO.

SSB #0~3 are mapped to RO #0, SSB #4~7 are mapped to RO #1, and the SSB indices mapped to other ROs may be analogously derived.

One SSB contains R=16 preambles. The preamble indices corresponding to the 4 SSBs in one RO are {0~15}, {16~31}, {32~47}, {48~63}, respectively.

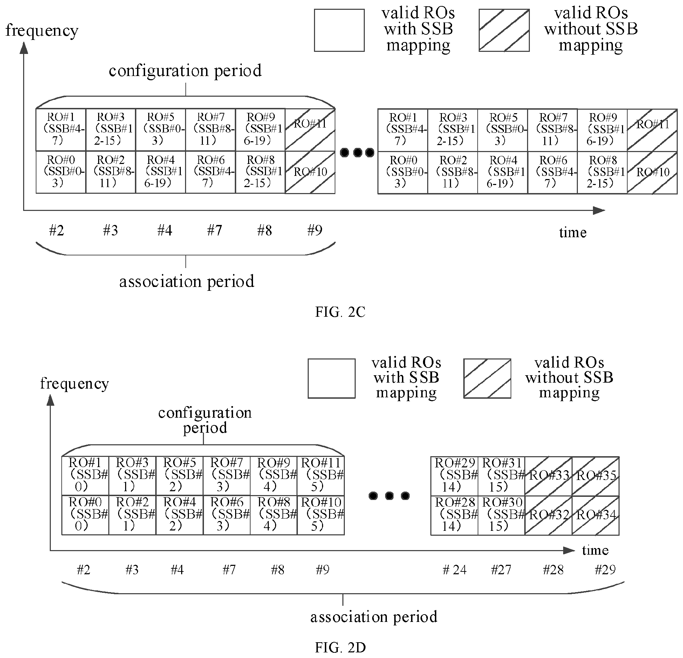

The horizontal axis "time" in FIG. 2C indicates a symbol where the valid RO is located, and does not represent consecutive symbols in the time domain. The length of one slot is 1ms.
The time domain of RO #0~1 is OS#0~5 in slot #2,
The time domain of RO #2~3 is OS#0~5 in slot #3,
The time domain of RO #4~5 is OS#0~5 in slot #4.

Case 2: When one SSB is associated with one or more valid ROs, the terminal sends a PRACH signal in a valid RO #n associated with an optimal SSB #m. The network device determines that an optimal beam of the terminal corresponds to SSB #m based on the time-frequency location of the valid RO. One configuration is: ssb-perRACH-OccasionAndCB-PreamblesPerSSB CHOICE {onehalf n64}. This indicates that 1/2 SSB is mapped to one valid RO, i.e., one SSB is mapped to 2 valid ROs, and one SSB includes 64 preambles, with preamble indices 0-63.

In some embodiments, in FIG. 2D, there are 12 valid ROs in the PRACH configuration period, and there are 16 SSBs in total. One SSB is mapped to 2 valid ROs. One SSB contains R=64 preambles. SSB #0 is mapped to RO #0~1, SSB #2 is mapped to RO #2~3, and the SSB indices mapped to other ROs may be analogously derived.

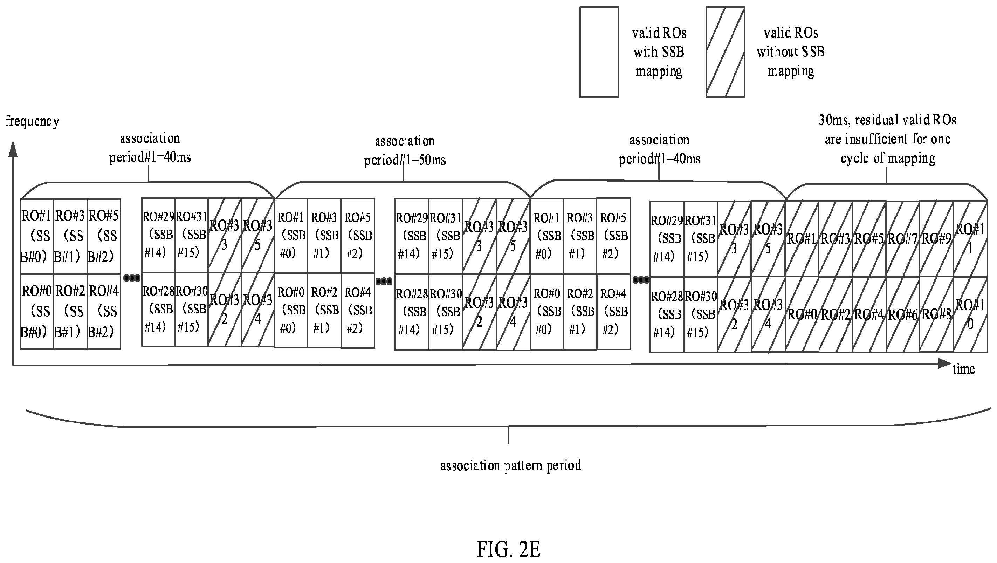

In the above embodiments, not all SSBs can be mapped to valid ROs contained within one PRACH configuration period. As shown in FIG. 2E, there are ${N}_{TX}^{SSB} = 15$ SSBs in total, in which 6 SSBs may be mapped to valid ROs contained within one PRACH configuration period. In this case, 15 SSBs may be mapped to valid ROs in 3 PRACH configuration periods. Accordingly, some embodiments provide an association period.

For the association period, it length is N times the PRACH configuration period, where N is a minimum value satisfying condition 1 from a set corresponding to the PRACH configuration period in Table 1.

Condition 1: within the association period, each of the ${N}_{TX}^{SSB}$ SSBs is mapped to a valid RO at least once.

**Table 1**

| PRACH configuration period | association period |
|---|---|
| 10 | {1, 2, 4, 8, 16} |
| 20 | {1, 2, 4, 8} |
| 40 | {1, 2, 4} |
| 80 | {1, 2} |
| 100 | {1} |

${N}_{TX}^{SSB}$ is a number of SSBs obtained based on the configuration in ssb-PositionsInBurst in SIB1 or in ServingCellConfigCommon.

Mapping each of the SSBs to a valid RO once may be referred to as one cycle of mapping.

After performing M cycles of mapping in the association period, if residual ROs or preambles are insufficient for one cycle of mapping, no SSB may be mapped to these residual ROs or preambles.

If the valid ROs contained in one PRACH configuration period is sufficient for performing M1 cycles of mapping: when M1 > 1, M = M1 > 1; in other cases, M = 1.

In the above embodiments, 2 examples of the association period are as follows.

In FIG. 2C, the association period contains 1 PRACH configuration period. After one cycle of mapping, ROs #10~11 remain, so no SSB is mapped to ROs #10~11.

In FIG. 2D, the association period contains 3 PRACH configuration periods. After one cycle of mapping, ROs #32~35 remain, so no SSB is mapped to ROs #32~35.

Furthermore, in the mapping relationship between SSBs and valid ROs, an association pattern period is defined.

The association pattern period includes N2 association periods, enabling a duration of a pattern for mapping SSB to valid RO not to exceed 160ms, where N2 is greater than or equal to 1.

Within the duration of 160ms, after an integer number of association periods, if the residual valid ROs is insufficient for performing one cycle of mapping, no SSB may be mapped to these residual valid ROs, and the residual valid ROs are not used for PRACH transmission.

In some embodiments, among the N2 association periods, the durations of different association periods may be different.

In some embodiments, the durations of association period #1, 2, 3 are 40ms, 50ms, 40ms respectively. The residual 30ms within the 160ms is insufficient for one cycle of mapping, so N2=3, and SSBs may not be mapped to valid ROs within the last 30ms.

A method for sending indication information provided by the embodiments of the present disclosure is described in detail below with reference to the accompanying drawings.

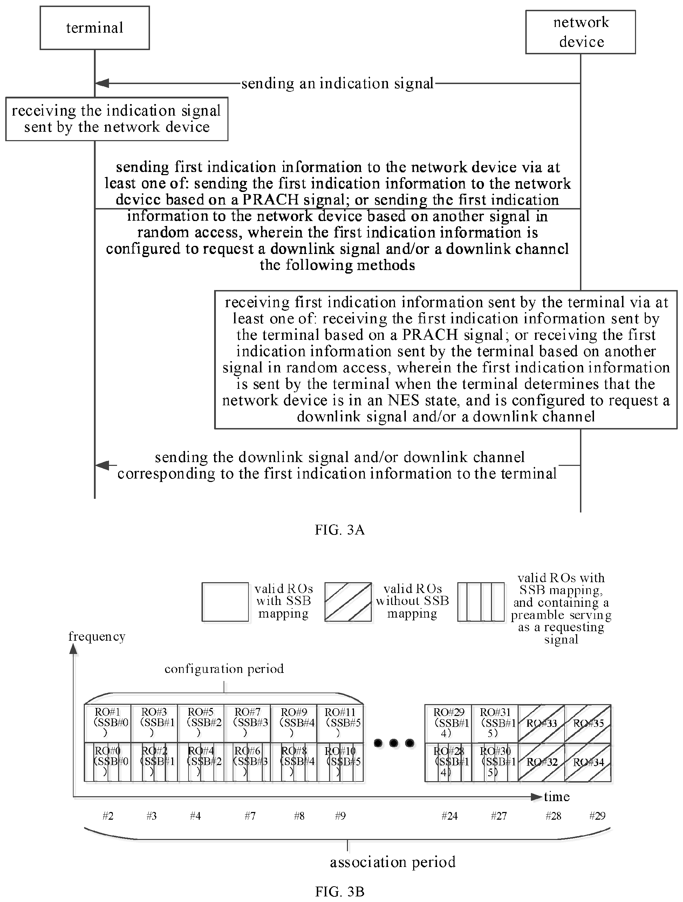

FIG. 3A is an interaction schematic diagram of a method for sending indication information according to an embodiment of the present disclosure. As shown in FIG. 3A, the method may include the following steps.

Step S3101, a network device enters the NES state and sends an indication signal to a terminal, wherein the indication signal indicates a specific sub-state used by the network device.

In an embodiment of the present disclosure, the terminal may be, for example, an NES terminal.

In an embodiment of the present disclosure, the network device may, for example, indicate, via a higher layer signaling configuration, an SIB1 configuration, or dynamic signaling, one or more types of signal combinations included in a downlink signal and/or a downlink channel sent by the network device.

For example, the combinations included in the downlink signal and/or downlink channel may include: a first combination (Combination #1): SSB and SIB1; a second combination (Combination #2): SSB; a third combination (Combination #3): SIB1; a fourth combination (Combination #4): SSB and all SI information; a fifth combination (Combination #5): all SI information; a sixth combination (Combination #6): SIBn (where n is a positive integer greater than 1); a seventh combination (Combination #7): other common signals.

The all SI information includes SIB1 and SIBn (n > 1).

In an embodiment of the present disclosure, the network device may configure an index for each of one or more types of signal combinations. A requesting signal may indicate one or more indices among the one or more types of signal combinations. Based on the one or more indices indicated in the received request signal, the network device determines a signal that the NES terminal expects to acquire. The content of each combination in the one or more types of signal combinations is not limited in the embodiments of the present disclosure, and the mapping relationship between the content indicated in the requesting signal and the signal expected by the NES terminal is also not limited.

In an embodiment of the present disclosure, the indication signal indicates whether the network device is in the NES state and/or a specific sub-state used when the network device is in the NES state and/or a specific sub-state used when the network device is in a non-NES state. The name of this indication signal is not limited. For example, the indication signal may be, for example, a first signal, or may be, for example, a state indication signal. The embodiments of the present disclosure do not limit this.

In an embodiment of the present disclosure, the specific sub-state used when the network device is in the NES state is a sub-state in a first sub-state set, the first sub-state set includes at least one of the following sub-states: a first sub-state, wherein the first sub-state is a state of not sending an SSB, not sending an SIB1, not sending an SIBn, and not sending another common signal, wherein n is a positive integer greater than 1; a second sub-state, wherein the second sub-state is a state of not sending an SSB, sending an SIB1, not sending an SIBn, and not sending another common signal; a third sub-state, wherein the third sub-state is a state of sending an SSB, not sending an SIB1, not sending an SIBn, and not sending another common signal; a fourth sub-state, wherein the fourth sub-state is a state of not sending an SSB, not sending an SIB1, sending an SIBn, and not sending another common signal; a fifth sub-state, wherein the fifth sub-state is a state of not sending an SSB, sending an SIB1, sending an SIBn, and not sending another common signal; a sixth sub-state, wherein the sixth sub-state is a state of sending an SSB, not sending an SIB1, sending an SIBn, and not sending another common signal; a seventh sub-state, wherein the seventh sub-state is a state of not sending an SSB, not sending an SIB1, not sending an SIBn, and sending another common signal; an eighth sub-state, wherein the eighth sub-state is a state of not sending an SSB, sending an SIB1, not sending an SIBn, and sending another common signal; a ninth sub-state, wherein the ninth sub-state is a state of sending an SSB, not sending an SIB1, not sending an SIBn, and sending another common signal; a tenth sub-state, wherein the tenth sub-state is a state of not sending an SSB, not sending an SIB1, sending an SIBn, and sending another common signal; an eleventh sub-state, wherein the eleventh sub-state is a state of not sending an SSB, sending an SIB1, sending an SIBn, and sending another common signal; or a twelfth sub-state, wherein the twelfth sub-state is a state of sending an SSB, not sending an SIB1, sending an SIBn, and sending another common signal.

In an embodiment of the present disclosure, a number of sub-states in the first sub-state set and the categories of signals sent or not sent in each sub-state are not limited. For example, the first sub-state set may include one or more sub-states. The ordinal numbers before the sub-states, e.g., "first," "second," are only used to distinguish different sub-states and do not specifically refer to a fixed sub-state. The specific sub-state used when the network device is in the NES state is one of the sub-states in the first sub-state set.

In an embodiment of the present disclosure, the network device may notify the terminal of the specific sub-state used when the network device is in the NES state via at least one of a protocol pre-definition, a higher layer configuration, and a dynamic indication. The embodiments of the present disclosure do not limit this.

In an embodiment of the present disclosure, for example, the network device may notify the terminal of the specific sub-state used when the network device is in the NES state via the protocol pre-definition.

In an embodiment of the present disclosure, for example, the network device may notify the terminal of the specific sub-state used when the network device is in the NES state via the higher layer configuration.

In an embodiment of the present disclosure, for example, the network device may notify the terminal of the specific sub-state used when the network device is in the NES state via the dynamic indication.

In an embodiment of the present disclosure, the specific sub-state used is the first sub-state, wherein the first sub-state is a state of not sending SSB, not sending SIB1, not sending SIBn, and not sending other common signals, wherein n is a positive integer greater than 1.

In an embodiment of the present disclosure, the specific sub-state used is the second sub-state, wherein the second sub-state is a state of not sending SSB, sending SIB1, not sending SIBn, and not sending other common signals, wherein n is a positive integer greater than 1.

In an embodiment of the present disclosure, the specific sub-state used is the third sub-state, wherein the third sub-state is a state of sending SSB, not sending SIB1, not sending SIBn, and not sending other common signals, wherein n is a positive integer greater than 1.

In an embodiment of the present disclosure, the specific sub-state used is the fourth sub-state, wherein the fourth sub-state is a state of not sending SSB, not sending SIB1, sending SIBn, and not sending other common signals, wherein n is a positive integer greater than 1.

In an embodiment of the present disclosure, the specific sub-state used is the fifth sub-state, wherein the fifth sub-state is a state of not sending SSB, sending SIB1, sending SIBn, and not sending other common signals, wherein n is a positive integer greater than 1.

In an embodiment of the present disclosure, the specific sub-state used is the sixth sub-state, wherein the sixth sub-state is a state of sending SSB, not sending SIB1, sending SIBn, and not sending other common signals, wherein n is a positive integer greater than 1.

In an embodiment of the present disclosure, the specific sub-state used is the seventh sub-state, wherein the seventh sub-state is a state of not sending SSB, not sending SIB1, not sending SIBn, and sending other common signals, wherein n is a positive integer greater than 1.

In an embodiment of the present disclosure, the specific sub-state used is the eighth sub-state, wherein the eighth sub-state is a state of not sending SSB, sending SIB1, not sending SIBn, and sending other common signals, wherein n is a positive integer greater than 1.

In an embodiment of the present disclosure, the specific sub-state used is the ninth sub-state, wherein the ninth sub-state is a state of sending SSB, not sending SIB1, not sending SIBn, and sending other common signals.

In an embodiment of the present disclosure, the specific sub-state used is the tenth sub-state, wherein the tenth sub-state is a state of not sending SSB, not sending SIB1, sending SIBn, and sending other common signals, wherein n is a positive integer greater than 1.

In an embodiment of the present disclosure, the specific sub-state used is the eleventh sub-state, wherein the eleventh sub-state is a state of not sending SSB, sending SIB1, sending SIBn, and sending other common signals, wherein n is a positive integer greater than 1.

In an embodiment of the present disclosure, the specific sub-state used is the twelfth sub-state, wherein the twelfth sub-state is a state of sending SSB, not sending SIB1, sending SIBn, and sending other common signals, wherein n is a positive integer greater than 1.

In an embodiment of the present disclosure, the indication signal indicates whether the network device is in the NES state and/or the specific sub-state used when the network device is in the NES state and/or the specific sub-state used when the network device is in a non-NES state. When the network device is in the non-NES state, it uses a thirteenth sub-state, wherein the thirteenth sub-state is a state of sending SSB, sending SIB1, sending SIBn (n>1), and sending other common signals.

Step S3102, the terminal receives the indication signal sent by the network device.

Step S3103, based on the indication signal, the terminal determines whether the network device is in a Network Energy Saving (NES) state.

In an embodiment of the present disclosure, upon receiving the indication signal, the terminal may determine whether the network device is in the NES state or a non-NES state.

In an embodiment of the present disclosure, when the terminal determines that the network device is in the NES state based on the indication signal, the terminal may further determine a sub-state used by the network device.

In an embodiment of the present disclosure, the indication signal may indicate specific information included in the sub-state used by the network device when it is in the NES state.

In an embodiment of the present disclosure, the indication signal includes a first number of bits, the first number corresponds to a number of sub-states in the first sub-state set.

In an embodiment of the present disclosure, the network device may indicate the specific sub-state used for example, via at least one bit. The first number corresponding to the at least one bit may be determined, for example, based on the number of sub-states in the first sub-state set. For example, when the number of sub-states in the first sub-state set is 3, 2 bits may be used to indicate the specific sub-state.

Step S3104, it is determined that the network device is in the NES state, the terminal sends first indication information to the network device via at least one of: sending the first indication information to the network device based on a PRACH signal; or sending the first indication information to the network device based on another signal in random access, wherein the first indication information is configured to request a downlink signal and/or a downlink channel the following methods.

In an embodiment of the present disclosure, for example, the terminal may send the first indication information to the network device based on a PRACH signal or other signals in random access.

In an embodiment of the present disclosure, for example, the terminal may send the first indication information to the network device based on a PRACH signal.

In an embodiment of the present disclosure, for example, the terminal may send the first indication information to the network device based on another signal in random access.

In an embodiment of the present disclosure, the network device may, for example, configure a RACH configuration #1 for random access. The network device may also configure a RACH configuration #2 for requesting the network device to send the downlink signal and/or the downlink channel.

In an embodiment of the present disclosure, a first random access request is sent to the network device, wherein the first random access request includes an information element, and the information element is used to request the downlink signal and/or the downlink channel.

In an embodiment of the present disclosure, when the terminal initiates random access, during the random access process, it may, for example, carry an information element requesting the network device to send the downlink signal and/or the downlink channel.

In an embodiment of the present disclosure, the first random access request may refer, for example, to a random access request that includes the information element. The "first" in "first random access request" may be used to distinguish it from other random access requests.

In an embodiment of the present disclosure, sending the first random access request to the network device comprises: in 4-step random access, sending a message 3 (MSG3) scheduled by a Random Access Response (RAR) to the network device, wherein the MSG3 carries the information element.

In an embodiment of the present disclosure, sending the first random access request to the network device comprises: in 2-step random access, sending a message A (MSGA) to the network device, wherein the MSGA carries the information element.

In an embodiment of the present disclosure, the information element comprises at least one of: a first bit, wherein the first bit indicates requesting the network device to send a Synchronization Signal and physical broadcast channel block (SSB) and a System Information Block 1 (SIB1); a second bit, wherein the second bit indicates requesting the network device to send at least one of an SSB or an SIB1; second indication information, wherein the second indication information indicates at least one of: whether a requested SSB is a simplified SSB, or whether system information and/or other common signals are transmitted only when there is a change, wherein the system information comprises at least one of an SIB1 or a System Information Block n (SIBn), and the other common signals are common signals other than the SIB1 and the SIBn, n being a positive integer greater than 1; third indication information, wherein the third indication information indicates a beam used by the network device to send the downlink signal and/or the downlink channel; fourth indication information, wherein the fourth indication information indicates a number of transmissions of the downlink signal and/or the downlink channel sent by the network device; or fifth indication information, wherein the fifth indication information indicates a minimum time interval between a reception time point for receiving the downlink signal and/or the downlink channel and a transmission time point of the first indication information.

In an embodiment of the present disclosure, the information element comprises a first bit, wherein the first bit indicates requesting the network device to send the SSB and SIB1.

In an embodiment of the present disclosure, the first bit may be, for example, 1 bit. The 1 bit indicates requesting the network device to send the SSB and SIB1.

In an embodiment of the present disclosure, the information element comprises a second bit, wherein the second bit indicates requesting the network device to send at least one of the SSB or the SIB1.

In an embodiment of the present disclosure, the second bit may be, for example, 2 bits. The 2 bits indicate requesting the network device to send at least one of the SSB and the SIB1. The 2 bits indicate requesting the network device to send the SSB. The 2 bits indicate requesting the network device to send the SIB1. The 2 bits indicate requesting the network device to send both the SSB and SIB1.

In an embodiment of the present disclosure, the information element comprises second indication information, wherein the second indication information indicates at least one of: whether the requested SSB is a simplified SSB; or whether system information and/or other common signals are transmitted only when there is a change, wherein the system information includes at least one of SIB1 and SIBn, and the other common signals are common signals other than SIB1 and SIBn, n being a positive integer greater than 1.

In an embodiment of the present disclosure, the information element comprises second indication information, wherein the second indication information indicates whether the requested SSB is a simplified SSB. The simplified SSB may include, for example, only a PSS (Primary Synchronization Signal) and an SSS signal.

In an embodiment of the present disclosure, the information element comprises second indication information, wherein the second indication information indicates whether system information and/or other common signals are transmitted only when there is a change, wherein the system information includes at least one of SIB1 and SIBn, and the other common signals are common signals other than SIB1 and SIBn, n being a positive integer greater than 1.

In an embodiment of the present disclosure, the information element comprises second indication information, wherein the second indication information indicates whether system information is transmitted only when there is a change, wherein the system information includes SIB1, n being a positive integer greater than 1.

In an embodiment of the present disclosure, the information element comprises second indication information, wherein the second indication information indicates whether system information is transmitted only when there is a change, wherein the system information includes SIBn, n being a positive integer greater than 1.

In an embodiment of the present disclosure, the information element comprises second indication information, wherein the second indication information indicates whether system information and/or other common signals are transmitted only when there is a change, wherein the system information includes SIB1 and SIBn, n being a positive integer greater than 1.

In an embodiment of the present disclosure, the information element comprises second indication information, wherein the second indication information indicates whether other common signals are transmitted only when there is a change, wherein the system information includes at least one of SIB1 and SIBn, and the other common signals are common signals other than SIB1 and SIBn, n being a positive integer greater than 1.

In an embodiment of the present disclosure, the information element comprises second indication information, wherein the second indication information indicates whether system information and other common signals are transmitted only when there is a change, wherein the system information includes at least one of SIB1 and SIBn, and the other common signals are common signals other than SIB1 and SIBn, n being a positive integer greater than 1.

In an embodiment of the present disclosure, the information element comprises third indication information, wherein the third indication information indicates the beam used by the network device to send the downlink signal and/or the downlink channel.

In an embodiment of the present disclosure, the information element comprises third indication information, and the third indication information indicates at least one of: in 4-step random access, the beam used by the network device being a first beam corresponding to an MSG3; in 2-step random access, the beam used by the network device being a second beam corresponding to an MSGA; in 4-step random access, the beam used by the network device comprising the first beam corresponding to a first beam index and valid beams among n beams before and after the first beam index, wherein n is an integer greater than or equal to zero; in 2-step random access, the beam used by the network device comprising the second beam corresponding to a second beam index and valid beams among n beams before and after the second beam index; or in 4-step random access or 2-step random access, a direction of the beam used by the network device comprises all beam directions of SSB.

The valid beam means that the beam is one of all beam directions of the SSB. There are 8 beam directions for the SSB, with beam indices SSB #0~7. If the first beam index is SSB #m, the beams before and after the first beam index are SSB #m-n, ..., SSB #m-1, SSB #m+1, ..., SSB #m+n. For example, the first beam index is 1, i.e., SSB #1, and n=2, the beams before and after the first beam index are SSB #-1, SSB #0, SSB #2, SSB #3. SSB #0, SSB #2, SSB #3 are valid beams among all beam directions of the SSB, and SSB #-1 is not the valid beam. If the first beam index is 7, i.e., SSB #7, and n=2, the beams before and after the first beam index are SSB #5, SSB #6, SSB #8, SSB #9. SSB #5, SSB #6 are valid beams, and SSB #8, SSB #9 are not.

In an embodiment of the present disclosure, the information element comprises fourth indication information, wherein the fourth indication information indicates the number of transmissions of the downlink signal and/or the downlink channel sent by the network device.

In an embodiment of the present disclosure, the information element comprises fifth indication information, wherein the fifth indication information indicates the minimum time interval between the reception time point for receiving the downlink signal and/or the downlink channel and the transmission time point of the first indication information.

In an embodiment of the present disclosure, when the network device is in the NES state, on an RO time-frequency resource configured by a predefined RACH configuration, the NES terminal initiates random access and carries an information element during the random access process to request the network device to send the downlink signal and/or downlink channel, where the downlink signal and/or downlink channel at least include SSB and/or SIB1. The predefined RACH configuration may be RACH configuration #1 or RACH configuration #2. In MSG3 in 4-step random access and MSGA in 2-step random access, the NES terminal may send the first indication information on the PUSCH. The NES terminal may carry an information element in the PUSCH to request the network device to send the downlink signal and/or downlink channel, where MSG3 and MSGA may serve as requesting signals.

Furthermore, in an embodiment of the present disclosure, the information element carried in MSG3 or MSGA may include one or more of the following sub-information elements. The sub-information elements may include, for example, a first sub-information element #1, a second sub-information element #2, a third sub-information element #3, a fourth sub-information element #4, and a fifth sub-information element #5. The first sub-information element #1, the second sub-information element #2, the third sub-information element #3, the fourth sub-information element #4, and the fifth sub-information element #5 may be enabled, for example, through the following schemes, or may also be enabled through other configuration information or protocol pre-definition.

In an embodiment of the present disclosure, the signal combinations included in the downlink signal and/or downlink channel sent by the network device is indicated via protocol pre-definition, higher layer signaling configuration, SIB1 configuration, or dynamic signaling. The first sub-information element #1 may include, for example, n bits, where the n bits indicates one or more types of signal combinations included in the downlink signal and/or downlink channel.

In an embodiment of the present disclosure, a first option (Option 1) may be, for example, that n bits indicate an index an index included in the downlink signal and/or downlink channel, which corresponds to one type of signal combination. The value of n may be determined, for example, based on the number m of types of signal combinations, and n may be greater than or equal to ceil(log2(m)), where ceil denotes rounding up. A specific example of the first option (Option 1) may be shown in Tables 2 and 3.

**Table 2**

| first sub-information element #1 containing 1 bit | interpretation of first sub-information element #1 |
|---|---|
| 0 or first sub-information element #1 absent | NES terminal does not request network device to send SSB and SIB1 |
| 1 | NES terminal requests network device to send SSB and SIB1 |

**Table 3**

| first sub-information element #1 containing 2 bit | interpretation of first sub-information element #1 |
|---|---|
| 00 or first sub-information element #1 absent | NES terminal does not request network device to send SSB and SIB1 |
| 01 | NES terminal requests network device to |
| | send SSB and SIB1 |
| 10 | NES terminal requests network device to send SSB |
| 11 | NES terminal requests network device to send SSB1 |

In an embodiment of the present disclosure, the bit values and the interpretation of the sub-information element is not limited.

In an embodiment of the present disclosure, a second option (Option 2) may be, for example, that n bits are a bitmap. If the k-th bit among the n bits has a value of 1, the terminal requests the network device to send the k-th combination in the downlink signals and/or downlink channels; or if the k-th bit has a value of 0, the terminal requests the network device to send the k-th combination in downlink signals and/or downlink channels. The value of n may be determined, for example, based on the number m of types of signal combinations, where n is greater than or equal to m.

In an embodiment of the present disclosure, when the downlink signal or downlink channel includes one type of signal combination, the first sub-information element #1 may include, for example, 1 bit, and this 1 bit indicates requesting the network device to send the SSB and SIB1. The one type of signal combination may be, for example, Combination #1: SSB and SIB1.

In an embodiment of the present disclosure, when the downlink signal or downlink channel includes four types of signal combinations, the first sub-information element #1 may include, for example, 2 bits, and the 2 bits indicates requesting the network device to send one of the four types of signal combinations. The four types of signal combinations may be, for example, Combination #2: SSB; Combination #3: SIB1; Combination #6: SIBn (n>1); Combination #7: other common signals.

In an embodiment of the present disclosure, when the downlink signal or downlink channel includes four types of signal combinations, the first sub-information element #1 may include, for example, 4 bits, and the 4 bits indicates requesting the network device to send one or more of the four types of signal combinations. The four types of signal combinations may be, for example, Combination #2: SSB; Combination #3: SIB1; Combination #6: SIBn (n>1); Combination #7: other common signals.

In an embodiment of the present disclosure, when the first sub-information element #1 is not configured, the terminal may request Combination #1 or a predefined downlink signal and/or downlink channel.

In an embodiment of the present disclosure, the carried second sub-information element #2 may include an indication of whether the requested SSB is a simplified SSB, or whether system information and/or other common signals are transmitted only when there is a change, wherein the system information includes at least one of SIB1 and SIBn, the other common signals are common signals other than SIB1 and SIBn, and n is a positive integer greater than 1.

In an embodiment of the present disclosure, the second sub-information element #2 may be, for example, 1 bit, indicating whether the SSB is a simplified SSB. When the value of the 1 bit is 1, it indicates that the SSB is a simplified SSB; when the value of the 1 bit is 0, it indicates that the SSB is a regular SSB. Or, when the value of the 1 bit is 0, it indicates that the SSB is a simplified SSB; when the value is 1, it indicates a regular SSB.

In an embodiment of the present disclosure, the second sub-information element #2 may be, for example, 1 bit, used to indicate whether system information and/or other common signals are transmitted only when there is a change.

In an embodiment of the present disclosure, when the value of the 1 bit is 1, it indicates that system information and/or other common signals are transmitted only when there is a change; when the value is 0, it indicates that the system information and/or other common signals are transmitted whenever requested by the terminal.

In an embodiment of the present disclosure, when the value of the 1 bit is 0, it indicates that system information and/or other common signals are transmitted only when there is a change; when the value is 1, it indicates that the system information and/or other common signals are transmitted whenever requested by the terminal.

In an embodiment of the present disclosure, if the second sub-information element #2 is not configured, the SSB requested by the terminal is a regular SSB, or SIB1 and/or SIBn and/or other common information are transmitted upon terminal request, or the terminal uses a predefined criterion.

In an embodiment of the present disclosure, the third sub-information element #3 may be used, for example, to request the beam used by the network device to send the downlink signal and/or downlink channel. Several options for the used beam include the following.

Option 1: the beam used for sending the downlink signal and/or downlink channel is beam #m corresponding to MSG1 or MSGA.

Option 2: the beam used for sending the downlink signal and/or downlink channel includes beam #m corresponding to MSG1 or MSGA and valid beams among n beams before and after beam #m (n ≥ 0).

Option 3: the downlink signal and/or downlink channel are sent in all beam directions of the SSB.

The valid beam means that the beam is one of all beam directions of the SSB. There are 8 beam directions for the SSB, with beam indices SSB #0~7. If the first beam index is SSB #m, the beams before and after the first beam index are SSB #m-n, ..., SSB #m-1, SSB #m+1, ..., SSB #m+n. For example, the first beam index is 1, i.e., SSB #1, and n=2, the beams before and after the first beam index are SSB #-1, SSB #0, SSB #2, SSB #3. SSB #0, SSB #2, SSB #3 are valid beams among all beam directions of the SSB, and SSB #-1 is not the valid beam. If the first beam index is 7, i.e., SSB #7, and n=2, the beams before and after the first beam index are SSB #5, SSB #6, SSB #8, SSB #9. SSB #5, SSB #6 are valid beams, and SSB #8, SSB #9 are not.

The number of schemes for the used beam is not limited in the embodiments of the present disclosure. The third sub-information element #3 may also indicate, for example, the specific scheme to be used.

In an embodiment of the present disclosure, if sub-information element #3 is not configured, Option 1 or a protocol-predefined scheme may be used.

In an embodiment of the present disclosure, the fourth sub-information element #4 may be used, for example, to indicate the number k of transmissions of the downlink signal and/or downlink channel requested from the network device. The number k of transmissions may be determined based on the capability of the NES terminal, enabling the NES terminal to successfully detect the downlink signal and/or downlink channel with high probability.

In an embodiment of the present disclosure, the NES terminal may, for example, report the number k of transmissions or other information that may be used to determine the number k of transmissions. The embodiments of the present disclosure do not limit this.

In an embodiment of the present disclosure, k may differ for different signals.

In an embodiment of the present disclosure, the number k of transmissions may be used, for example, to indicate that the downlink signal and/or downlink channel is sent k times on each of the beams determined according to the fourth sub-information element #4.

In an embodiment of the present disclosure, if the fourth sub-information element #4 is not configured, the requested downlink signal and/or downlink channel is sent once or a predefined number of times.

In an embodiment of the present disclosure, the fifth sub-information element #5 is used, for example, to indicate the minimum time interval between the reception time point for receiving the downlink signal and/or downlink channel requested from the network device and the transmission time point of the requesting signal. The minimum time interval may be determined based on the capability of the NES terminal, allowing the NES terminal to have sufficient preparation time to switch from sending an uplink signal to receiving the requested downlink signal and/or downlink channel.

In an embodiment of the present disclosure, the NES terminal may report the minimum time interval or other information that may be used to determine the minimum time interval. The embodiments of the present disclosure do not limit this. Specific examples of the minimum time interval may include the following.

Option 1: the minimum time interval may be, for example, a number of symbols between a last symbol of the requesting signal and a first symbol of the downlink signal and/or downlink channel sent by the network device for the first time.

Option 2: the minimum time interval may be, for example, a number of slots between a slot of the requesting signal and a slot where the network device sends the downlink signal and/or downlink channel for the first time.

In an embodiment of the present disclosure, if the fifth sub-information element #5 is not configured, Option 2 or a protocol-predefined scheme is used.

In an embodiment of the present disclosure, sending the first indication information to the network device based on another signal in random access comprises: sending a second random access request to the network device, wherein the second random access request includes a specific preamble in a specific valid RO, and the specific preamble is configured to request the downlink signal and/or the downlink channel.

For example, based on the RO time-frequency resource configuration configured by a predefined RACH configuration, a specific preamble in a specific valid RO may be configured. The specific preamble in this valid RO is used to request the network device to send the downlink signal and/or the downlink channel, where the downlink signal and/or the downlink channel at least include SSB and/or SIB1. The predefined RACH configuration may be RACH configuration #1 or RACH configuration #2. Based on the RO time-frequency resource configuration of the RACH configuration #1 or the RACH configuration #2, the association periods contained in the association pattern period may be determined. The valid ROs contained in the association period may be determined, and a specific preamble in a specific valid RO is selected for requesting the network device to send the downlink signal and/or the downlink channel.

In an embodiment of the present disclosure, the specific valid transmission occasion includes all transmission occasions or part of transmission occasions.

In an embodiment of the present disclosure, the specific valid transmission occasion includes all transmission occasions.

In an embodiment of the present disclosure, the specific valid transmission occasion includes part of transmission occasions.

In an embodiment of the present disclosure, the method further comprises: selecting one first association period every N2 association periods, and selecting one or more valid ROs in the first association period, wherein N2 is a positive integer greater than or equal to 1; and selecting one association pattern period every N1 association pattern periods, selecting one second association period every N3 association periods within the one association pattern period, and selecting one or more valid ROs in the second association period, wherein N1 is a positive integer greater than or equal to 1, and N3 is a positive integer greater than or equal to 1

In an embodiment of the present disclosure, for example, a scheme for selecting the valid ROs may include the following schemes.

Scheme 1: one or more association periods are selected every N2 association periods, and one or more valid ROs are selected in each of the one or more association periods. The value of N2 may be configured. If it is not configured, a default value may be used. For example, N2 may be 1. The configured value for valid ROs may indicate, for example, an index corresponding to a row in some embodiments. In an embodiment, a new value and a mapping rule for selecting valid ROs may be defined. The embodiments of the present disclosure do not limit this.

Scheme 2: one or more association pattern periods are selected every N1 association pattern periods. In each of the one or more association pattern periods, one or more association periods are selected every N2 association periods. In each of the one or more association periods, one or more valid ROs are selected. The value of N1 may be configured; if not configured, a default value may be used, for example, N1=1. The value of N2 may be configured; if not configured, a default value may be used, for example, N2=1. The configured value for valid ROs may indicate, for example, an index corresponding to a row in some embodiments. In an embodiment, a new value and a mapping rule for selecting valid ROs may be defined. The embodiments of the present disclosure do not limit this.

In an embodiment of the present disclosure, for example, a scheme for selecting a specific preamble in a specific valid RO may include the following schemes.

In each of the specific one or more valid ROs:
1): When m SSBs are associated with 1 valid RO and m ≥ 1, m*k preambles may be configured for requesting the network device to send the downlink signal and/or downlink channel, where each SSB has k preambles available for requesting the network device to send the downlink signal and/or downlink channel, and k is an integer greater than or equal to 1.
2): When m SSBs are associated with 1 valid RO and m < 1, k preambles may be configured for requesting the network device to send the downlink signal and/or downlink channel, where k is an integer greater than or equal to 1.
3): A starting index k1 of preambles used for requesting the network device to send the downlink signal and/or downlink channel is configured. When m < 1, preambles with indices k1 to k1+k-1 are used for requesting the network device to send the downlink signal and/or downlink channel. When m ≥ 1, for the i-th (i=0,1,...,m-1) SSB among the m SSBs, the preamble with index k1 + i*k is used for requesting the network device to send the downlink signal and/or downlink channel.
4): In an embodiment, a starting index value k0 is configured, to determine that, within one RO, the k0-th to (k0+k-1)-th preambles among the N preambles associated with one SSB are used for requesting the network device to send SSB and/or SIB1.
5): For each SSB, the starting index of the preamble used for requesting the network device to send the downlink signal and/or downlink channel is configured.

In an embodiment of the present disclosure, for example, the value of k may be configured; if not configured, the value of k defaults to a default value, for example, k may be 1.

The scheme for selecting valid ROs and the scheme for selecting a specific preamble in a specific valid RO may be, for example, a request configuration.

In an embodiment of the present disclosure, FIG. 3B illustrates an example of a specific valid RO and a specific preamble requesting a network device to send SSB and/or SIB1. In the selected association period, 16 valid ROs (valid RO #0, 2, 4, 6, 8, 10, 12, 14, 16, 18, 20, 22, 24, 26, 28, 30) are selected, and one preamble is selected for each valid RO, i.e., a valid RO and preamble configuration for requesting the network device to send the downlink signal and/or downlink channel is configured.

In an embodiment of the present disclosure, a specific preamble in a specific valid RO among the ROs configured by RACH configuration #1 is used to request the network device to send the downlink signal and/or downlink channel, where the downlink signals and/or downlink channels at least include SSB and/or SIB1. When the specific valid RO and specific preamble are used for random access of a legacy terminal and for a NES terminal requesting the network device to send the downlink signal and/or downlink channel, the network device may receive the same preamble and unable to determine whether it is used for random access of legacy terminal or for the NES terminal to request the network device to send the downlink signal and/or downlink channel. The following schemes may be used to determine the purpose of the received preamble:

Option 1: the NES network device only allows the NES terminal to access. When the NES network device receives the specific preamble on the specific valid RO, the network device determines that the signal is used for the NES terminal to request the network device to send the downlink signal and/or downlink channel, where the downlink signal and/or downlink channel at least include SSB and/or SIB1.

Option 2: the NES network device allows both the NES terminal and the legacy terminal to access. It indicates, via MSG3 in 4-step random access or MSGA in 2-step random access, whether the specific preamble on the specific valid RO is used to request the network device to send the downlink signal and/or downlink channel, where the downlink signals and/or downlink channels at least include SSB and/or SIB1.

In an embodiment of the present disclosure, the above request configuration may also be used for sub-schemes 2-1, 2-2, 2-3, 2-4, and 2-5.

Sub-scheme #2-1: the signal combinations included in the downlink signal and/or downlink channel are indicated by protocol pre-definition/network device higher layer signaling configuration/SIB1 configuration/dynamic indication. For example, multiple request configurations may be configured, where one request configuration corresponds to one type of signal combination, enabling the requesting signal to request the network device to send different combinations in the signal combinations. For example, only one request configuration may be configured, and the terminal requests Combination #1 (SSB and SIB1) or a predefined downlink signal and/or downlink channel.

Sub-scheme #2-2: different request configurations may also be used to distinguish whether the requested SSB is a simplified SSB (e.g., simplified SSB includes only PSS signal and SSS) and/or whether system information or other common information is transmitted only when there is a change. For example, two request configurations may distinguish between case #1 and case #2, where case #1 is that the requested SSB is a simplified SSB, and case #2 is that the requested SSB is a regular SSB. Two request configurations may also distinguish between case #3 and case #4, where case #3 is that system information or other common information is transmitted only when there is a change, and case #4 is that system information or other common information is transmitted whenever requested by the terminal. For example, only one request configuration may be configured, where the terminal requests a regular SSB, and SIB1 and/or SIBn and/or other common information is transmitted upon terminal request or the terminal uses a predefined criterion.

Sub-scheme #2-3: the request configuration may also be used to indicate the beam used by the network device to send the downlink signal and/or downlink channel, including the following options.

Option 1: the beam used for sending the downlink signal and/or downlink channel is beam #m corresponding to MSG1 or MSGA;

Option 2: the beam used for sending the downlink signal and/or downlink channel includes beam #m corresponding to MSG1 or MSGA and valid beams among n beams before and after beam #m (n ≥ 0);

Option 3: the downlink signal and/or downlink channel are sent in all beam directions of the SSB.

The valid beam means that the beam is one of all beam directions of the SSB. There are 8 beam directions for the SSB, with beam indices SSB #0~7. If the first beam index is SSB #m, the beams before and after the first beam index are SSB #m-n, ..., SSB #m-1, SSB #m+1, ..., SSB #m+n. For example, the first beam index is 1, i.e., SSB #1, and n=2, the beams before and after the first beam index are SSB #-1, SSB #0, SSB #2, SSB #3. SSB #0, SSB #2, SSB #3 are valid beams among all beam directions of the SSB, and SSB #-1 is not the valid beam. If the first beam index is 7, i.e., SSB #7, and n=2, the beams before and after the first beam index are SSB #5, SSB #6, SSB #8, SSB #9. SSB #5, SSB #6 are valid beams, and SSB #8, SSB #9 are not.

In an embodiment of the present disclosure, three request configurations may distinguish between Option 1, Option 2, and Option 3. The number of schemes of the used beam is not limited in the embodiments of the present disclosure; different request configurations may be used to distinguish the schemes of the used beam.

In an embodiment of the present disclosure, only one request configuration may be configured, and Option 1 or a protocol-predefined scheme may be used.

Sub-scheme #2-4: different request configurations may also be used to distinguish the number k of transmissions of the downlink signal and/or downlink channel requested from the network device. The number k of transmissions may be determined based on the capability of the NES terminal, enabling the NES terminal to successfully detect the downlink signal and/or downlink channel with high probability. The NES terminal may report the number k of transmissions or other information that may be used to determine the number k of transmissions. Here, k may differ for different signals. The number k of transmissions is used to send the requested downlink signal and/or downlink channel k times on each of the beams determined according to sub-scheme #2-3. When only one request configuration is configured, the requested downlink signal and/or downlink channel is sent once or a predefined number of times.

Sub-scheme #2-5: different request configurations may also be used to distinguish the minimum time interval between the time of requesting the network device to send the downlink signal and/or downlink channel and the requesting signal. The minimum time interval may be determined based on the capability of the NES terminal, allowing the NES terminal to have sufficient preparation time. The NES terminal may report the minimum time interval or other information that may be used to determine the minimum time interval.

Option 1: the minimum interval refers to a number of symbols between the last symbol of the requesting signal and the first symbol of the downlink signal and/or downlink channel sent by the network device for the first time.

Option 2: the minimum interval refers to a number of slots between the slot of the requesting signal and the slot of the downlink signal and/or downlink channel sent by the network device for the first time. When only one request configuration is configured, Option 2 or a protocol-predefined scheme is used.

In an embodiment of the present disclosure, for sub-schemes 2-1, 2-2, 2-3, 2-4, and 2-5, one or more functions among sub-schemes 2-1, 2-2, 2-3, 2-4, and 2-5 may also be enabled through other configuration information. The embodiments of the present disclosure do not limit this.

In an embodiment of the present disclosure, the specific preamble is all or part of preambles of one RO.

In an embodiment of the present disclosure, the specific preamble is all preambles of one RO.

In an embodiment of the present disclosure, the specific preamble is part of the preambles of one RO.

In an embodiment of the present disclosure, the network device may configure a specific preamble in a specific RO, where the specific preamble in the specific RO is used to request the network device to send the downlink signal and/or downlink channel.

In an embodiment of the present disclosure, sending the first indication information to the network device based on another signal in random access comprises: sending the first indication information to the network device using a valid RO and a preamble in a second random access channel configuration (RACH configuration #2), wherein the RACH configuration #2 is configured by the network device for requesting the downlink signal and/or the downlink channel.

In an embodiment of the present disclosure, a time-frequency position of the RO in the second RACH configuration #2 is different from a time-frequency position of n RO in a first RACH configuration #1, and the first RACH configuration #1 is configured by the network device for random access.

In an embodiment of the present disclosure, the time-frequency position being different comprises at least one of: a time domain position of the RO in the second RACH configuration #2 being the same as a time domain position of the RO in the first RACH configuration #1, and a frequency domain position in the second RACH configuration #2 being different from a frequency domain position in the first RACH configuration #1; a time domain position of the RO in the second RACH configuration #2 being different from a time domain position of the RO in the first RACH configuration #1, and a frequency domain position in the second RACH configuration #2 being the same as a frequency domain position in the first RACH configuration #1; or a time domain position of the RO in the second RACH configuration #2 being different from a time domain position of the RO in the first RACH configuration #1, and a frequency domain position in the second RACH configuration #2 being different from a frequency domain position in the first RACH configuration #1.

In an embodiment of the present disclosure, the time-frequency position of the RO in the second RACH configuration #2 is the same as the time-frequency position of the RO in the first RACH configuration #1.

In an embodiment of the present disclosure, the time-frequency positions being the same comprises a preamble used in the second RACH configuration #2 being different from a preamble used in the first RACH configuration #1.

In an embodiment of the present disclosure, the network device configures a RACH configuration #1 for random access, and the network device configures a RACH configuration #2 for requesting the network device to send the downlink signal and/or downlink channel, where the downlink signal and/or downlink channel at least include sending SSB and/or SIB1. This may include at least the following configuration scenarios.

First configuration scenario: the time-frequency positions of the RO in RACH configuration #2 are different from those of the RO in RACH configuration #1.

Sub-scheme 3-1-1: the time domain position of the RO configured by the RACH configuration #2 is the same as the time domain position of the RO configured by the RACH configuration #1, and the frequency domain position of the RO configured by the RACH configuration #2 is different from the frequency domain position of the RO configured by the RACH configuration #1.

Option 1: the frequency domain position of the RO configured by RACH configuration #2 is independently configured.

Option 2: the frequency domain position of the RO configured by RACH configuration #2 is obtained by adding an offset #1 to the frequency domain position of the RO configured by RACH configuration #1. Other information of the RO configured by RACH configuration #2 may be obtained based on RACH configuration #1.

Sub-scheme 3-1-2: the time domain position of the RO configured by the RACH configuration #2 is different from the time domain position of the RO configured by the RACH configuration #1, and the frequency domain position of the RO configured by the RACH configuration #2 is the same as the frequency domain position of the RO configured by the RACH configuration #1.

Option 1: the time domain position of RO configured by RACH configuration #2 is independently configured.

Option 2: the time domain position of RO configured by RACH configuration #2 is obtained by adding an offset #2 to the time domain position of RO configured by RACH configuration #1. Other information of the RO configured by RACH configuration #2 may be obtained based on RACH configuration #1.

Sub-scheme 3-1-3: the time domain position and the frequency domain position of RO configured by RACH configuration #2 are both different from the time domain position and the frequency domain position of RO configured by RACH configuration #1.

Option 1: the time domain position and frequency domain position of RO configured by RACH configuration #2 are independently configured.

Option 2: the frequency domain position of RO configured by RACH configuration #2 is obtained by adding an offset #1 to the frequency domain position of the RO configured by RACH configuration #1, and the time domain positions is obtained by adding an offset #2 to the time domain position of RO configured by RACH configuration #1. Other information of the ROs configured by RACH configuration #2 may be obtained based on RACH configuration #1.

In an embodiment of the present disclosure, the time-frequency positions of RO in RACH configuration #2 for requesting the downlink signal and/or downlink channel are the same as the time-frequency positions of RO in RACH configuration #1 for random access.

Sub-scheme 3-1-4: a preamble used in RACH configuration #2 is different from a preamble used in RACH configuration #1.

RACH configuration #2 configures a preamble starting index and a number of preambles used in the RO for requesting the network device to send the downlink signal and/or downlink channel.

In an embodiment, the preamble starting index used in the RO configured by RACH configuration #2 is adjacent to the preamble maximum index used in the RO configured by RACH configuration #1.

In an embodiment of the present disclosure, in sub-schemes 3-1-1, 3-1-2, and 3-1-3, the RO for random access is different from the RO for requesting the network device to send the downlink signal and/or downlink channel. Whether the preamble for random access is the same as the preamble for requesting the network device to send the downlink signal and/or downlink channel is not restricted.

In an embodiment of the present disclosure, in sub-scheme 3-1-4, the RO for random access may be the same as the RO for requesting the network device to send the downlink signal and/or downlink channel, but the preamble for random access is different from the preamble for requesting the network device to send the downlink signal and/or downlink channel.

In an embodiment of the present disclosure, the mapping relationships between SSBs and valid ROs in RACH configuration #1 and RACH configuration #2 may be mapping relationship #1 and mapping relationship #2, respectively.

When mapping relationship #1 and mapping relationship #2 are different, mapping relationship #2 for RACH configuration #2 is independently configured.

When mapping relationship #1 and mapping relationship #2 are the same, mapping relationship #2 is not necessarily to be configured in RACH configuration #2.

The above are examples of configuration of RO time-frequency position configuration #2 and SSB-to-valid RO mapping relationship #2. The embodiments of the present disclosure are not limited to this.

Based on the RO time-frequency position configuration in RACH configuration #2 and the mapping relationship #2 of SSB to valid RO, the mapping of SSB to valid RO in RACH configuration #2 is determined.

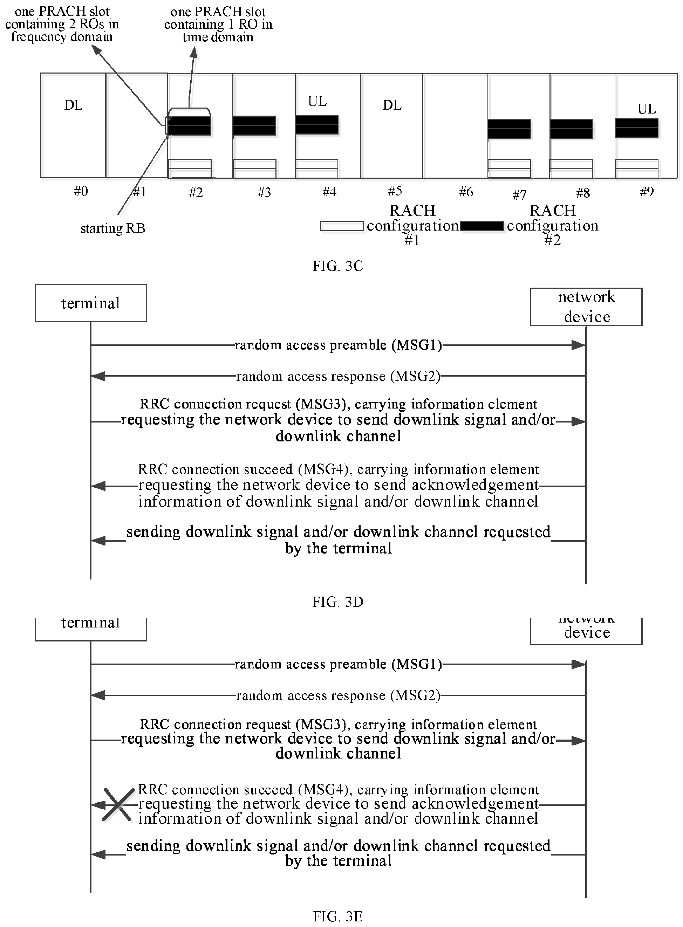

In an embodiment of the present disclosure, FIG. 3C shows an example of an RO time-frequency position configuration for RACH configuration #2. The time domain position of RO in RACH configuration #2 is the same as the time domain position of RO in RACH configuration #1, and they are frequency-division multiplexed in the frequency domain.

In an embodiment of the present disclosure, the valid RO and preamble that are actually used for requesting the network device to send the downlink signal and/or downlink channel are determined among the configured ROs in RACH configuration #2, i.e., the request configuration is determined. The request configuration may also implement the functions in sub-schemes #2-1, #2-2, #2-3, #2-4, #2-5 of the second embodiment.

In this disclosure, one or more functions among sub-schemes #2-1, #2-2, #2-3, #2-4, #2-5 of the above embodiments may be enabled through other configuration information, which is not limited in this disclosure.

In an embodiment of the present disclosure, sending the first indication information to the network device based on another signal in random access comprises: sending the first indication information to the network device using a specific preamble of a specific valid RO, wherein the specific valid RO is a RO among residual valid ROs in a first RACH configuration #1, the first RACH configuration #1 is configured by the network device for random access, and the residual valid ROs are valid ROs whose part of or all preambles are not used for random access after mapping valid ROs and preambles to SSBs in an association pattern period.

In an embodiment of the present disclosure, the network device configures RACH configuration #1 for random access. Based on the RO time-frequency position configured by RACH configuration #1 and the mapping relationship #1 of SSB to valid RO, valid ROs are determined from the ROs configured by RACH configuration #1. Further, the valid RO and the preamble used for random access in the association pattern period may be determined. There may be one or more valid ROs in the association pattern period where part or all of the preambles are not mapped to SSBs and are not used for random access, as shown in FIG. 2E for valid ROs without SSB mapping.

In an embodiment of the present disclosure, after completing the mapping of SSBs to valid ROs and preambles in the association pattern period, valid ROs where part or all preambles are not used for random access may be called residual valid ROs, and preambles in residual valid ROs that are not used for random access may be called residual preambles. The mapping of SSBs to residual valid ROs may use the following options.

Option 1: the mapping relationship #1 of SSB to valid RO may be used for mapping SSBs to residual valid ROs.

Option 2: an additional mapping relationship #2 of SSB to valid RO may be configured for mapping SSBs to residual valid ROs.

In an embodiment of the present disclosure, only residual valid ROs where all preambles are residual preambles are selected for mapping to SSBs. Here, mapping relationships in Option 1 or Option 2 may be used for mapping. In Option 1 and Option 2, residual preambles in residual valid ROs is able to participate in SSB mapping.

In an embodiment of the present disclosure, the above mapping of SSBs to residual valid ROs and residual preambles is an example. The implementation of mapping SSBs to residual valid ROs and residual preambles is not limited in the embodiments of the present disclosure. In an embodiment, an association period #2 is determined. In the association period #2, each of all SSBs may be mapped to a residual valid RO and a residual preamble at least once.

In an embodiment of the present disclosure, an association pattern period #2 is determined. The association pattern period #2 includes N2 association periods #2, enabling the duration of the pattern for mapping SSB to valid RO not to exceed Z ms, where N2 is greater than or equal to 1. Here, Z is a protocol default value or a higher layer configured value, for example, Z may be 160.

In an embodiment of the present disclosure, using the methods in the above embodiments, the valid ROs and preambles among the configured ROs in the association pattern period #2 that are actually used for requesting the network device to send the downlink signal and/or downlink channel are determined, i.e., the request configuration is determined. The request configuration may also implement the functions in sub-schemes #2-1, #2-2, #2-3, #2-4, #2-5 of the second embodiment. In the embodiments of the present disclosure, one or more functions among sub-schemes #2-1, #2-2, #2-3, #2-4, #2-5 of the second embodiment may also be enabled through other configuration information, which is not limited.

In an embodiment of the present disclosure, sending the first indication information to the network device comprises: sending the first indication information to the network device using a specific preamble of a specific valid RO in a predefined third random access channel configuration (RACH configuration #3).

In an embodiment of the present disclosure, the third RACH configuration #3 may be, for example, the first RACH configuration #1 or the second RACH configuration #2.

In an embodiment of the present disclosure, before sending the first indication information to the network device based on the PRACH signal, the method further comprises: configuring the PRACH signal for sending the first indication information with at least one of the following parameters being different from that of a PRACH signal used for random access: preamble target received power; or preamble power ramping step.

In an embodiment of the present disclosure, before sending the first indication information to the network device based on the PRACH signal, the method further comprises: configuring the PRACH signal for sending the first indication information with the preamble target received power being different from that of a PRACH signal used for random access.

In an embodiment of the present disclosure, for requesting the network device to send the downlink signal and/or downlink channel, when using the PRACH signal as the requesting signal, in the above multiple embodiments, method a or b may be used to make the power of the PRACH signal sufficiently large, improving the probability of successful reception of the PRACH signal acting as the requesting signal.

Method a: compared to a PRACH signal not used as the requesting signal, at least one of the following parameters may be differentially configured to make the transmit power of the PRACH signal used as a requesting signal sufficiently large: preambleReceivedTargetPower; (preamble target received power); or powerRampingStep (preamble power ramping step).

Method b: It may be enabled through configuration or protocol default that when a PRACH signal is used as a request, the PRACH signal at a full power is used for transmission.

In an embodiment of the present disclosure, a power difference between MSG3 or MSGA and the PRACH signal is deltaPreamble #1 or deltaPreamble #2. When using MSG3 or MSGA as the requesting signal, in the above multiple embodiments, method a or b may be enabled to make the power of the PRACH signal sufficiently large, thereby making the transmit power of MSG3 or MSGA as the requesting signal sufficiently large. Method c or d may also be used to make the transmit power of MSG3 or MSGA as the requesting signal sufficiently large.

Method c: compared to MSG3 or MSGA not used as requesting signals, differentially configure deltaPreamble #1 or deltaPreamble #2 to make the power of MSG3 or MSGA used as a requesting signal sufficiently large.

Method d: it may be enabled through configuration or protocol default that MSG3 or MSGA used as a requesting signal is at full power for transmission.

In an embodiment of the present disclosure, when the requesting signal is MSG3 or MSGA, a method combining method a with method c, or combining method b with method c may also be used to make the transmit power of MSG3 or MSGA used as a requesting signal sufficiently large. The embodiments of the present disclosure are not limited to this.

In an embodiment of the present disclosure, before sending the first indication information to the network device based on the PRACH signal, the method further comprises: configuring the PRACH signal for sending the first indication information with the preamble power ramping step being different from that of a PRACH signal used for random access.

In an embodiment of the present disclosure, sending the first indication information to the network device based on the PRACH signal comprises: sending the first indication information to the network device using the PRACH signal for sending the first indication information at a full power.

In an embodiment of the present disclosure, sending the first indication information to the network device comprises: when the terminal is in a radio resource control-connected (RRC-CONNECTED) state, sending the first indication information to a first cell, wherein the first indication information is configured to request a second cell to send the requested downlink signal and/or the downlink channel.

In an embodiment of the present disclosure, the downlink signal comprises at least one of: an SSB; an SIB1; an SIBn, wherein n is a positive integer greater than 1; or another common signal, wherein the other common signal is a common signal other than SIB1 and SIBn.

In an embodiment of the present disclosure, the downlink channel comprises at least one of: a Physical Broadcast Channel (PBCH); a Physical Downlink Control Channel (PDCCH); or a Physical Downlink Shared Channel (PDSCH).

In an embodiment of the present disclosure, when the NES terminal is in an RRC-CONNECTED state, the NES terminal may send a requesting signal to a first cell, the requesting signal requesting a second cell to send the requested downlink signal and/or downlink channel, which may include the following specific scenarios.

Scenario 1: when the NES terminal is in an RRC-CONNECTED state, the NES terminal may access an anchor cell. The NES terminal sends a requesting signal to the anchor cell, requesting a non-anchor cell to send information such as downlink signal and/or downlink channel.

Scenario 2: when the NES terminal is in an RRC-CONNECTED state, the NES terminal may be in a CA state. The NES terminal sends a requesting signal to a Primary Cell (PCell) or a Primary Secondary Cell (PsCell) or a Secondary Primary Cell (sPcell), requesting an SCell to send information such as downlink signal and/or downlink channel. In an embodiment, the PCell or PsCell or sPcell is non-quasi-co-located with the Scell.

In the embodiments of the present disclosure, whether the cell receiving the requesting signal, after receiving the requesting signal, is the same as the cell that sends the downlink signal and/or downlink channel requested by the NES terminal is not limited.

In an embodiment of the present disclosure, the embodiments of the present disclosure may be performed by an NES terminal in any state, such as a CONNECTED terminals an IDLE terminal, or an INACTIVE terminal.

When the request-related configuration (e.g., time-frequency location of the requesting signal, available preambles, etc.) is determined via RRC signaling, the configuration is retained when the terminal enters the IDLE state or INACTIVE state, and the terminal may still send the requesting signal according to the configuration. Correspondingly, the network device may detect and receive the requesting signal at the corresponding resource location according to the configuration and perform the corresponding actions.

Step S3105: the network device receives the first indication information sent by the terminal via at least one of: receiving the first indication information sent by the terminal based on a PRACH signal, or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel, wherein the first indication information is sent by the terminal when it determines that the network device is in the NES state and is used to request a downlink signal and/or a downlink channel.

In an embodiment of the present disclosure, receiving the first indication information sent by the terminal based on another signal in random access comprises: receiving a first random access request sent by the terminal, wherein the first random access request comprises an information element, and the information element is configured to request the downlink signal and/or the downlink channel.

In an embodiment of the present disclosure, receiving the first indication information sent by the terminal based on another signal in random access comprises: receiving a second random access request sent by the terminal, wherein the second random access request comprises a specific preamble in a specific valid RO, and the specific preamble is configured to request the downlink signal and/or the downlink channel.

In an embodiment of the present disclosure, receiving the first indication information sent by the terminal based on another signal in random access comprises: receiving the first indication information sent by the terminal using a valid RO and a preamble in a second RACH configuration #2, wherein the RACH configuration #2 is configured by the network device for requesting the downlink signal and/or the downlink channel.

In an embodiment of the present disclosure, receiving the first indication information sent by the terminal based on another signal in random access comprises: receiving the first indication information sent by the terminal using a specific preamble of a specific valid RO, wherein the specific valid RO is a RO among residual valid ROs in a first random access channel configuration (RACH configuration #1), and the first RACH configuration #1 is configured by the network device for random access.

In an embodiment of the present disclosure, receiving the first indication information sent by the terminal based on another signal in random access comprises: receiving the first indication information sent by the terminal using a specific preamble of a specific valid RO in a predefined third RACH configuration #3.

Step S3106: the network device sends the downlink signal and/or downlink channel corresponding to the first indication information to the terminal.

In an embodiment of the present disclosure, the terminal may send an uplink signal, and the uplink signal or part of the information element in the uplink signal is used to request the network device to send the downlink signal and/or downlink channel. The uplink signal may be, for example, a requesting signal.

In an embodiment of the present disclosure, after receiving MSG3/MSGA as a requesting signal, the network device, after a certain delay, sends the downlink signal and/or downlink channel requested by the NES terminal k times in the designated beam direction according to the information element indication in the requesting signal. The downlink signal and/or downlink channel may be determined according to a first sub-information element #1 and/or a second sub-information element #2, or according to a protocol-predefined scheme. The designated beam may be determined according to a third sub-information element #3 or a protocol-predefined scheme, the number k of times may be determined according to a fourth sub-information element #4 or a protocol-predefined scheme, and the delay may be determined according to a fifth sub-information element #5 or a protocol-predefined scheme.

In an embodiment of the present disclosure, after receiving MSG3 or MSGA as a requesting signal, the network device may stop the random access process, including: the NES terminal not expecting to receive MSG4 or MSGB, and the network device sending an acknowledgement reply to the requesting signal of the NES terminal via other information.

In an embodiment of the present disclosure, after receiving MSG3 or MSGA as a requesting signal, the network device may continue the random access process. In the subsequent random access process, the network device may send an acknowledgement reply to the requesting signal of the NES terminal.

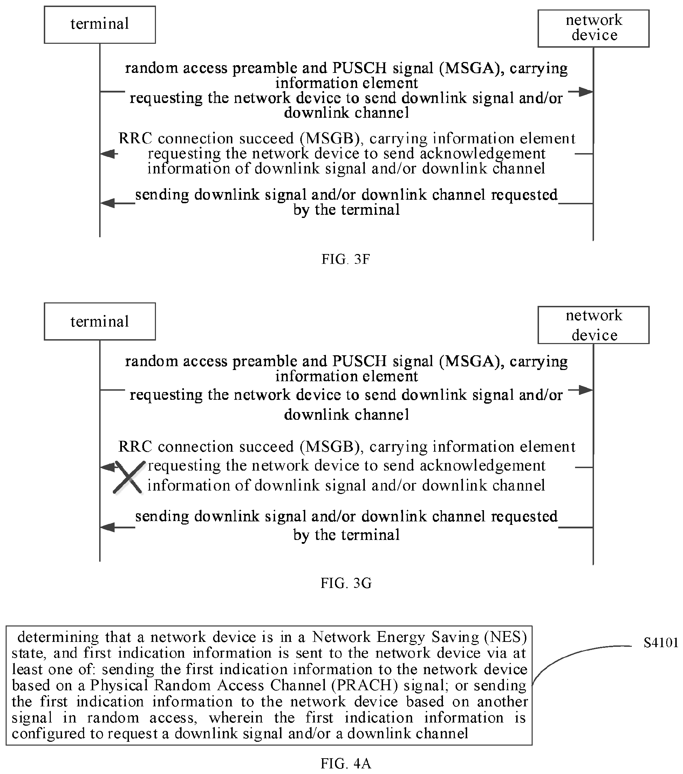

In an embodiment of the present disclosure, for example, a new information element may be added in MSG4 in 4-step random access or MSGB in 2-step random access to notify the NES terminal that the downlink signal and/or downlink channel request are received. FIG. 3D and FIG. 3E are examples of interaction diagrams for sending indication information. The requesting signal corresponding to FIG. 3B may be, for example, MSG3 in contention-based 4-step random access acting as a requesting signal. FIG. 3B may be, for example, an interaction diagram for sending indication information. FIG. 3F and FIG. 3G correspond to, for example, receiving MSGA as a requesting signal in contention-based 2-step random access.

In an embodiment of the present disclosure, the network device may send an acknowledgement reply to the requesting signal of the NES terminal via other information.

In an embodiment of the present disclosure, after receiving MSG3 or MSGA as a requesting signal from m NES terminals, the network device may, after a certain delay, send the downlink signal and/or downlink channel requested by the m NES terminals k1 times on the designated beam direction, where m ≥ 1.

In an embodiment of the present disclosure, the downlink signal and/or downlink channel may be determined according to the first sub-information element #1 and/or the second sub-information element #2 of each of the m NES terminals, or according to a protocol-predefined scheme.

In an embodiment of the present disclosure, the downlink signal and/or downlink channel is the union of the downlink signals and/or downlink channels requested by the m NES terminals.

In an embodiment of the present disclosure, the designated beam may be determined according to the third sub-information element #3 of each of the m NES terminals or a protocol-predefined scheme. Here, the designated beam is the union of the beams designated by the m NES terminals.

In an embodiment of the present disclosure, the number of times k may be determined according to the fourth sub-information element #4 of each of the m NES terminals or a protocol-predefined scheme. Here, the number of times k is the maximum of the numbers of times k requested by the m NES terminals.

In an embodiment of the present disclosure, the delay may be determined according to the fifth sub-information element #5 of each of the m NES terminals or a protocol-predefined scheme. Here, the delay may be determined based on the latest transmission time of the downlink signal and/or downlink channel among the m NES terminals.

In an embodiment of the present disclosure, after receiving a preamble as a requesting signal, the network device, according to the request configuration corresponding to the requesting signal, may, after a certain delay, send the downlink signal and/or downlink channel requested by the NES terminal k times on the designated beam direction. The downlink signal and/or downlink channel may be determined according to sub-scheme #2-1 and/or sub-scheme #2-2, or according to a protocol-predefined scheme; the designated beam may be determined according to sub-scheme #2-3 or a protocol-predefined scheme; the number of times k may be determined according to sub-scheme #2-4 or a protocol-predefined scheme; the delay may be determined according to sub-scheme #2-5 or a protocol-predefined scheme.

In an embodiment of the present disclosure, after receiving a preamble as a requesting signal, the network device may stop the random access process. Here, the NES terminal does not expect to receive MSG2 or MSGB. The network device may send an acknowledgement reply to the requesting signal of the NES terminal via other information.

In an embodiment of the present disclosure, after receiving a preamble as a requesting signal, the network device may continue the random access process. In an embodiment, in the subsequent random access process, the network device may send an acknowledgement reply to the requesting signal of the NES terminal.

In an embodiment of the present disclosure, a new information element is added in MSG2 in 4-step random access or MSGB in 2-step random access to notify the NES terminal that the downlink signal and/or downlink channel request are received. In an embodiment, the network device may send an acknowledgement reply to the requesting signal of the NES terminal via other information.

In an embodiment of the present disclosure, after receiving preambles as requesting signals from m NES terminals, the network device, after a certain delay, sends the downlink signal and/or downlink channel requested by the m NES terminals k1 times on the designated beam direction, where m ≥ 1.

In an embodiment of the present disclosure, the downlink signal and/or downlink channel may be determined according to sub-scheme #2-1 and/or sub-scheme #2-2 of each of the m NES terminals, or according to a protocol-predefined scheme.

In an embodiment of the present disclosure, the downlink signal and/or downlink channel is the union of the downlink signals and/or downlink channels requested by the m NES terminals.

In an embodiment of the present disclosure, the designated beam may be determined according to sub-scheme #2-3 of each of the m NES terminals or a protocol-predefined scheme.

In an embodiment of the present disclosure, the designated beam is the union of the beams designated by the m NES terminals.

In an embodiment of the present disclosure, the number of times k may be determined according to sub-scheme #2-4 of each of the m NES terminals or a protocol-predefined scheme.

In an embodiment of the present disclosure, the number of times k is the maximum of the numbers of times k requested by the m NES terminals.

In an embodiment of the present disclosure, the delay may be determined according to sub-scheme #2-5 of each of the m NES terminals or a protocol-predefined scheme. In an embodiment, the delay may be determined based on the latest transmission time of the downlink signal and/or downlink channel among the m NES terminals.

In some embodiments, steps S3101 to S3106 are optional, and one or more of these steps may be omitted or substituted in different embodiments.

The communication method involved in the embodiments of the present disclosure may include at least one of steps S3101 to S3106. For example, step S3101 may be implemented as an independent embodiment, step S3104 may be implemented as an independent embodiment, steps S3101 to S3103 may be implemented as an independent embodiment, but are not limited thereto.

In some embodiments, steps S3102 to S3106 are optional, and one or more of these steps may be omitted or substituted in different embodiments.

In some embodiments, steps S3103 to S3106 are optional, and one or more of these steps may be omitted or substituted in different embodiments.

FIG. 4A is a flowchart of a method for sending indication information according to an embodiment of the present disclosure. As shown in FIG. 4A, an embodiment of the present disclosure relates to a method for sending indication information executed by a terminal, the method comprising the following step.

Step S4101: it is determined that a network device is in a Network Energy Saving (NES) state, and first indication information is sent to the network device via at least one of: sending the first indication information to the network device based on a Physical Random Access Channel (PRACH) signal; or sending the first indication information to the network device based on another signal in random access, wherein the first indication information is configured to request a downlink signal and/or a downlink channel.

For optional implementations of step S4101, reference may be made to the optional implementations of steps S3102 to S3104 in FIG. 3A and other related parts of the embodiment involving FIG. 3A, which are not repeated here.

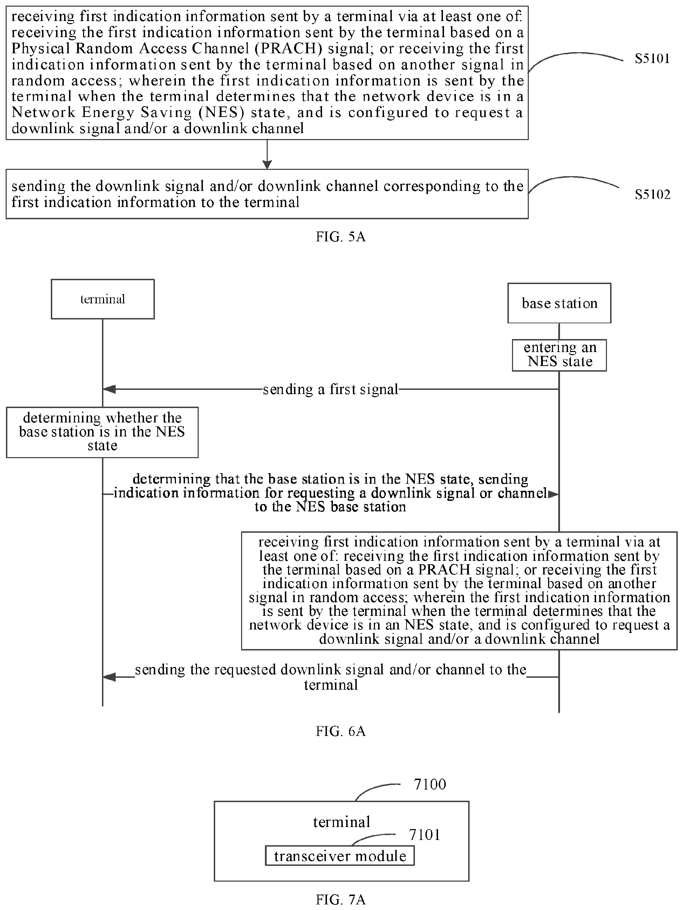

FIG. 5A is a flowchart of sending and receiving indication information according to an embodiment of the present disclosure. As shown in FIG. 5A, an embodiment of the present disclosure relates to a method for receiving indication information executed by a network device, the method comprising the following steps.

Step S5101: first indication information sent by a terminal is received via at least one of: receiving the first indication information sent by the terminal based on a Physical Random Access Channel (PRACH) signal; or receiving the first indication information sent by the terminal based on another signal in random access; wherein the first indication information is sent by the terminal when the terminal determines that the network device is in a Network Energy Saving (NES) state, and is configured to request a downlink signal and/or a downlink channel.

Step S5102: the downlink signal and/or downlink channel corresponding to the first indication information is sent to the terminal.

For optional implementations of steps S5101 and S5102, reference may be made to the optional implementations of steps S3101, S3105 to S3106 in FIG. 3A and other related parts of the embodiment involving FIG. 3A, which are not repeated here.

FIG. 6A is a flowchart of a method for sending indication information according to an embodiment of the present disclosure. As shown in FIG. 6A, an embodiment of the present disclosure relates to a method for sending indication information, the method comprising the following steps.

Step S6101: a base station enters a Network Energy Saving (NES) state.

In an embodiment of the present disclosure, an NES base station may be in an NES state or a non-NES state, as follows.

The NES state includes one or more of the following sub-states:
Sub-state 1: Not sending SSB, not sending SIB1, not sending SIBn (n>1), not sending other common signals.
Sub-state 2: Not sending SSB, sending SIB1, not sending SIBn (n>1), not sending other common signals.
Sub-state 3: Sending SSB, not sending SIB1, not sending SIBn (n>1), not sending other common signals.
Sub-state 4: Not sending SSB, not sending SIB1, sending SIBn (n>1), not sending other common signals.
Sub-state 5: Not sending SSB, sending SIB1, sending SIBn (n>1), not sending other common signals.
Sub-state 6: Sending SSB, not sending SIB1, sending SIBn (n>1), not sending other common signals.
Sub-state 7: Not sending SSB, not sending SIB1, not sending SIBn (n>1), sending other common signals.
Sub-state 8: Not sending SSB, sending SIB1, not sending SIBn (n>1), sending other common signals.
Sub-state 9: Sending SSB, not sending SIB1, not sending SIBn (n>1), sending other common signals.
Sub-state 10: Not sending SSB, not sending SIB1, sending SIBn (n>1), sending other common signals.
Sub-state 11: Not sending SSB, sending SIB1, sending SIBn (n>1), sending other common signals.
Sub-state 12: Sending SSB, not sending SIB1, sending SIBn (n>1), sending other common signals.

### Non-NES state:

Sub-state 13: Sending SSB, sending SIB1, sending SIBn (n>1), sending other common signals.

Other common signals are common signals other than SIB1 and SIBn, where n is a positive integer greater than 1.

In an embodiment of the present disclosure, the number of sub-states included in the NES state and the categories of signals sent or not sent in each sub-state are not limited. The base station may notify the terminal of the specific sub-state to be used when in the NES state via protocol pre-definition, higher layer configuration, or dynamic indication. The manner in which the base station notifies the terminal of the specific sub-state to be used when in the NES state is not limited in this embodiment.

Step S6102: the base station sends a first signal.

In an embodiment of the present disclosure, the first signal may be used by the NES terminal to determine whether the base station is in the NES state or non-NES state.

In an embodiment of the present disclosure, the first signal may be used by the NES terminal to further determine the sub-state of the base station when it is determined that the base station is in the NES state.

In an embodiment of the present disclosure, the first signal may notify the NES terminal of the specific sub-state when the base station is in the NES state. For example, 2 bits may be used to indicate the specific sub-state.

Step S6103: the NES terminal determines whether the base station is in the NES state.

Step S6104: if the NES terminal determines that the base station is in the NES state, the NES terminal sends indication information for requesting a downlink signal or channel to the NES base station.

In an embodiment of the present disclosure, the downlink signal and/or channel at least includes SSB and/or SIB1. The specific signals included in the requested downlink signal and/or channel are not limited in this embodiment.

Specific design schemes and examples for sending the indication information for requesting a downlink signal or channel to the NES base station in step S6104 may be as follows.

Step S6105: the base station sends the requested downlink signal and/or channel to the terminal.

In an embodiment of the present disclosure, on the terminal side, the terminal may request the base station to send a downlink signal and/or channel using the following methods.

The base station configures a RACH configuration #1 for random access. In an embodiment, the base station configures a RACH configuration #2 for requesting the base station to send a downlink signal and/or channel, where the downlink signal and/or channel at least includes SSB and/or SIB1. Unless otherwise specified, legacy terminals in this embodiment refer to terminals that do not support NES.

Method 1: the NES terminal initiates random access and carries an information element during the random access process to request the base station to send a downlink signal and/or channel, where the downlink signal and/or channel at least includes SSB and/or SIB1:
In 4-step random access, the information element is carried in MSG3 scheduled by the Random Access Response (RAR) to request the base station to send a downlink signal and/or channel.

Or, in 2-step random access, the information element is carried in message A (MSGA) to request the base station to send a downlink signal and/or channel.

In an embodiment of the present disclosure, the information element carried in MSG3/MSGA may include at least one of the following.

The information element includes 1 bit indicating requesting the base station to send SSB and SIB1, or the information element includes 2 bits indicating requesting the base station to send one of: SSB and SIB1, SSB only, or SIB1 only.

In an embodiment, the information element may include an indication of whether the requested SSB is a simplified SSB (e.g., simplified SSB includes only PSS and SSS signals), and/or an indication of whether SIB1 and/or SIBn and/or other common information is transmitted only when there is a change.

In an embodiment, the information element may include an indication of the beam used by the base station to send the downlink signal and/or downlink channel.

In an embodiment, the beam used for sending the downlink signal and/or downlink channel may be the beam corresponding to MSG1 or MSGA.

In an embodiment, the beam used for sending the downlink signal and/or downlink channel may include the beam #m corresponding to MSG1 or MSGA and valid beams among n beams before and after beam #m (n ≥ 0).

In an embodiment, the downlink signal and/or downlink channel may be sent in all beam directions of the SSB.

The valid beam means that the beam is one of all beam directions of the SSB. There are 8 beam directions for the SSB, with beam indices SSB #0~7. If the first beam index is SSB #m, the beams before and after the first beam index are SSB #m-n, ..., SSB #m-1, SSB #m+1, ..., SSB #m+n. For example, the first beam index is 1, i.e., SSB #1, and n=2, the beams before and after the first beam index are SSB #-1, SSB #0, SSB #2, SSB #3. SSB #0, SSB #2, SSB #3 are valid beams among all beam directions of the SSB, and SSB #-1 is not the valid beam. If the first beam index is 7, i.e., SSB #7, and n=2, the beams before and after the first beam index are SSB #5, SSB #6, SSB #8, SSB #9. SSB #5, SSB #6 are valid beams, and SSB #8, SSB #9 are not.

In an embodiment, the information element may include an indication of the number of transmissions of the downlink signal and/or downlink channel requested from the base station.

In an embodiment, the information element may include an indication of the minimum interval between requesting the base station to send the downlink signal and/or downlink channel and the requesting signal.

Method 2: the NES terminal initiates random access and may use a specific preamble in a specific valid RO to request the base station to send a downlink signal and/or downlink channel:
In an embodiment, all ROs or part of ROs may be used for requesting the base station to send a downlink signal and/or downlink channel.

In an embodiment, one association period is selected every N2 association periods, and one or more valid ROs is selected in the one association period.

In an embodiment, one association pattern period is selected every N1 association pattern periods, one association period is selected every N3 association periods within the association pattern period, and one or more valid ROs are selected in the one association period.

In an embodiment, part or all of the preambles in one RO may be used.

In an embodiment, the base station may configure a specific preamble in a specific RO for requesting the base station to send a downlink signal and/or downlink channel.

Method 3: the NES terminal initiates random access and may use a valid RO and a preamble in a RACH configuration #2 configured by the base station for requesting a downlink signal and/or downlink channel to request the base station to send the downlink signal and/or downlink channel:

In an embodiment, the time-frequency positions of an RO in RACH configuration #2 for requesting downlink signals and/or downlink channels are all different from those of an RO in RACH configuration #1 for random access.

The time domain position of RO configured by RACH configuration #2 is the same as the time domain position of RO configured by RACH configuration #1, and the frequency domain position of RO configured by RACH configuration #2 is different from the frequency domain position of RO configured by RACH configuration #1.

The time domain position of RO configured by RACH configuration #2 is different from the time domain position of RO configured by RACH configuration #1, and the frequency domain position of RO configured by RACH configuration #2 is the same as the frequency domain position of RO configured by RACH configuration #1.

Both the time domain position and frequency domain position of RO configured by RACH configuration #2 are different from the time domain position and frequency domain position of RO configured by RACH configuration #1.

In an embodiment, the time-frequency positions of RO in RACH configuration #2 for requesting downlink signals and/or downlink channels are exactly the same as those of RO in RACH configuration #1 for random access.

The preambles used in RACH configuration #2 are different from those used in RACH configuration #1.

Method 4: the NES terminal initiates random access and may use a specific preamble of a specific valid RO among residual valid ROs in RACH configuration #1 to request the base station to send a downlink signal and/or downlink channel, where the downlink signal and/or downlink channel at least includes SSB and/or SIB1.

In an embodiment, valid ROs are determined from the ROs configured by RACH configuration #1. After completing the mapping of SSBs to valid ROs and preambles in the association pattern period, valid ROs where part or all preambles are not used for random access may be called residual valid ROs.

Method 5: the NES terminal may send a request for the base station to send a downlink signal and/or downlink channel on a specific valid RO and a specific preamble according to a predefined RACH configuration, where the downlink signal and/or downlink channel at least includes SSB and/or SIB1.

In an embodiment, the predefined RACH configuration is RACH configuration #1 or RACH configuration #2, using Method 1 or Method 2 or Method 3 or Method 4 to request the base station to send a downlink signal and/or downlink channel.

Base station side: the base station may determine that the NES terminal requests the base station to send a downlink signal and/or downlink channel using the following methods.

Method 1: During the random access process, the base station may receive an information element carrying a request for the base station to send a downlink signal and/or downlink channel, and determine that the signal is used to request the base station to send a downlink signal and/or downlink channel, where the downlink signal and/or downlink channel at least includes SSB and/or SIB1.

The specific method is as described in Terminal-side Method 1 and are not repeated here.

Method 2: During the random access process, the base station may receive a specific preamble in a specific valid RO and determine that the signal is used to request the base station to send a downlink signal and/or downlink channel, where the downlink signal and/or downlink channel at least includes SSB and/or SIB1.

The specific method is as described in Terminal-side Method 2 and are not repeated here.

Method 3: During the random access process, the base station may receive a specific preamble in a specific valid RO in a RACH configuration #2 used for requesting a downlink signal and/or downlink channel, and determine that the signal is used to request the base station to send a downlink signal and/or downlink channel, where the downlink signal and/or downlink channel at least includes SSB and/or SIB1.

The specific method is as described in Terminal-side Method 3 and are not repeated here.

Method 4: During the random access process, the base station may receive a specific preamble in a specific valid RO among residual valid ROs in RACH configuration #1 and determine that the signal is used to request the base station to send a downlink signal and/or downlink channel, where the downlink signal and/or downlink channel at least includes SSB and/or SIB1.

The specific method is as described in Terminal-side Method 4 and are not repeated here.

Method 5: During the random access process, the base station may receive a specific preamble in a specific valid RO in a predefined RACH configuration used for requesting the base station to send a downlink signal and/or downlink channel, and determine that the signal is used to request the base station to send a downlink signal and/or downlink channel, where the downlink signal and/or downlink channel at least includes SSB and/or SIB1.

The predefined RACH configuration is RACH configuration #1 or RACH configuration #2.

The specific method is as described in Terminal-side Method 5 and are not repeated here.

In an embodiment, the downlink signal includes at least one of: an SSB; an SIB1; an SIBn, where n is a positive integer greater than 1; or another common signal, where the other common signal is a common signal other than SIB1 and SIBn.

In an embodiment, the downlink channel includes at least one of: a PBCH; a PDCCH; or a PDSCH.

In an embodiment, when the base station is in the NES state, on the RO time-frequency resources configured by a predefined RACH configuration, the NES terminal may initiate random access and carry an information element during the random access process to request the base station to send a downlink signal and/or downlink channel. The predefined RACH configuration may be RACH configuration #1 or RACH configuration #2. In MSG3 in 4-step random access and MSGA in 2-step random access, the NES terminal may send information on the PUSCH. Based on this, the NES terminal may carry an information element in the aforementioned PUSCH to request the base station to send a downlink signal and/or downlink channel, i.e., MSG3 and MSGA act as requesting signals. The format of the information element in MSG3 or MSGA for requesting the base station to send a downlink signal and/or downlink channel is not limited in this embodiment. The information element (IE) carried in MSG3 or MSGA may include one or more of the following sub-information elements.

Information element carried in MSG3 or MSGA includes at least one of Sub-IE #1, Sub-IE #2, or Sub-IE #3:

### Sub-IE #1:

The signal combinations included in the downlink signal and/or channel is indicated by protocol pre-definition, base station higher layer signaling configuration, SIB1 configuration, or dynamic indication. Sub-IE #1 may include n bits, where the n bits indicate one or more types of combinations of downlink signals and/or downlink channels.

Option 1: the n bits indicate an index, where the index corresponds to one type of combination. The value of n may be determined based on the number m of types of signal combinations, and n may be greater than or equal to ceil(log2(m)), where ceil denotes rounding up.

Option 2: the n bits are a bitmap. If the k-th bit among the n bits has a value of 1, the terminal requests the base station to send the k-th combination in downlink signal and/or downlink channel; or if the k-th bit has a value of 0, the terminal requests the base station to send the k-th combination in downlink signal and/or downlink channel. The value of n may be determined based on the number m of types of signal combinations, where n may be greater than or equal to m.

In an embodiment, when the downlink signal and/or channel includes 1 type of signal combination, such as Combination #a: SSB and SIB1, Sub-IE #1 may include 1 bit indicating a request for the base station to send SSB and SIB1.

In an embodiment, when the downlink signal and/or channel includes 4 types of signal combinations, such as Combination #a: SSB; Combination #b: SIB1; Combination #c: SIBn (n>1); Combination #d: another common signal, there may be the following options.

Option 1: 2 bits may be used to indicate one type of combination.

Option 2: 4 bits may be used to indicate one or more types of combinations.

In an embodiment, if Sub-IE #1 is not configured, the UE requests Combination #1 or a predefined downlink signal and/or channel.

In an embodiment, Sub-IE #2: the information element may include indication information of whether a requested SSB is a simplified SSB (e.g., simplified SSB includes only PSS and SSS signals), and/or indication information of whether SIB1 and/or SIBn and/or other common information is transmitted only when there is a change.

The 1 bit may be used to indicate whether the SSB is a simplified SSB. For example, a value of 1 indicates that the SSB is a simplified SSB, a value of 0 indicates that the SSB is a regular SSB; or a value of 0 indicates that the SSB is a simplified SSB, a value of 1 indicates that the SSB is a regular SSB.

The 1 bit may be used to indicate whether SIB1 and/or SIBn and/or other common information is transmitted only when there is a change. For example, a value of 1 indicates that SIB1 and/or SIBn and/or other common information is transmitted only when there is a change, a value of 0 indicates SIB1 and/or SIBn and/or other common information is transmitted upon UE request; or a value of 0 indicates SIB1 and/or SIBn and/or other common information is transmitted only on change, a value of 1 indicates SIB1 and/or SIBn and/or other common information is transmitted upon UE request.

In an embodiment, if Sub-IE #2 is not configured, a regular SSB requested by the UE, SIB1 and/or SIBn and/or other common information is transmitted upon terminal request, or the terminal uses a predefined criterion.

Sub-IE #3: the information element may include an indication of a beam used by the base station to send the downlink signal and/or downlink channel. Several options for the used beam are as follows.

Option 1: the beam used for sending the downlink signal and/or downlink channel is the beam #m corresponding to MSG1 or MSGA.

Option 2: the beam used for sending the downlink signal and/or downlink channel includes beam #m corresponding to MSG1 or MSGA and valid beams among n beams before and after beam #m (n ≥ 0).

Option 3: the downlink signal and/or downlink channel are sent in all beam directions of the SSB.

In an embodiment, the number of schemes of the used beam is not limited in this embodiment. Sub-IE #4 may indicate the specific scheme to be used.

In an embodiment, if Sub-IE #3 is not configured, Option 1 or a protocol-predefined scheme is used.

In an embodiment, Sub-IE #4: the information element may include an indication of the number k of transmissions of the downlink signal and/or downlink channel requested from the base station.

The number k of transmissions may be determined based on a capability of the NES terminal, enabling the NES terminal to successfully detect the downlink signal and/or downlink channel with high probability.

The NES terminal reports the number k of transmissions or other information that may be used to determine the number k of transmissions.

In an embodiment, k may differ for different signals.

In an embodiment, the number k of transmissions refers to sending the downlink signal and/or downlink channel k times on each of the beams determined according to Sub-IE #4.

In an embodiment, if Sub-IE #4 is not configured, the requested downlink signal and/or downlink channel is sent once or a predefined number of times.

In an embodiment, Sub-IE #5: the information element may include an indication of a minimum interval between the time requesting the base station to send the downlink signal and/or downlink channel and the time sending the requesting signal.

The minimum interval may be determined based on the capability of the NES terminal, allowing the NES terminal sufficient preparation time to switch from sending an uplink signal to receiving the requested downlink signal and/or downlink channel.

The NES terminal reports the minimum time interval or other information that may be used to determine the minimum time interval.

Option 1: the minimum interval refers to a number of symbols between a last symbol of the requesting signal and a first symbol of the downlink signal and/or downlink channel sent by the base station for the first time.

Option 2: the minimum interval refers to a number of slots between a slot of the requesting signal and a slot where the base station sends the downlink signal and/or downlink channel for the first time.

In an embodiment, if Sub-IE #5 is not configured, Option 2 or a protocol-predefined scheme is used.

In this embodiment, one or more functions among Sub-IE #1, Sub-IE #2, Sub-IE #3, Sub-IE #4, Sub-IE #5 may be enabled through other configuration information or protocol pre-definition scheme, which is not limited in this disclosure.

An example of Option 1 for Sub-IE #1 is as follows:

| Sub-IE #1 containing 1 bit | Interpretation of Sub-IE #1 |
|---|---|
| 0 or Sub-IE #1 absent | NES terminal does not request base station to send SSB and SIB1 |
| 1 | NES terminal requests base station to send SSB and SIB1 |

Another example of Option 1 for Sub-IE #1 is as follows:

| Sub-IE #1 containing 2 bits | Interpretation of Sub-IE #1 |
|---|---|
| 00 or Sub-IE #1 absent | NES terminal does not request base station to send SSB and SIB1 |
| 01 | NES terminal requests base station to send SSB and SIB1 |
| 10 | NES terminal requests base station to send SSB |
| 11 | NES terminal requests base station to send |
| | SIB1 |

In this embodiment, the mapping relationship between bit values in the sub-IE and the interpretation of the sub-IE is not limited.

In an embodiment, after receiving MSG3 or MSGA as a requesting signal, the base station, after a certain delay, sends the downlink signal and/or downlink channel requested by the NES terminal k times on the designated beam direction according to the information element indication in the requesting signal. The downlink signal and/or downlink channel may be determined according to Sub-IE #1 and/or Sub-IE #2, or according to a protocol-predefined scheme; the designated beam may be determined according to Sub-IE #3 or a protocol-predefined scheme; the number of times k may be determined according to Sub-IE #4 or a protocol-predefined scheme; the delay may be determined according to Sub-IE #5 or a protocol-predefined scheme.

In an embodiment, after receiving MSG3 or MSGA as a requesting signal, the base station may stop the random access process.

At this time, the NES terminal does not expect to receive MSG4 or MSGB.

In an embodiment, the base station may send an acknowledgement reply to the requesting signal of the NES terminal via other information.

In an embodiment, after receiving MSG3 or MSGA as a requesting signal, the base station may continue the random access process.

In an embodiment, in the subsequent random access process, the base station may send an acknowledgement reply to the requesting signal of the NES terminal.

In an embodiment, a new information element is added in MSG4 in 4-step random access or MSGB in 2-step random access to notify the NES terminal that the downlink signal and/or downlink channel request are received.

In an embodiment, the base station may send an acknowledgement reply to the requesting signal of the NES terminal via other information.

In an embodiment, after receiving MSG3 or MSGA as the requesting signal from m NES terminals, the base station, after a certain delay, sends the downlink signal and/or downlink channel requested by the m NES terminals k1 times on the designated beam direction, where m ≥ 1.

The downlink signal and/or downlink channel may be determined according to Sub-IE #1 and/or Sub-IE #2 of each of the m NES terminals, or according to a protocol-predefined scheme.

In an embodiment, the downlink signal and/or downlink channel is the union of the downlink signals and/or downlink channels requested by the m NES terminals.

In an embodiment, the designated beam may be determined according to Sub-IE #3 of each of the m NES terminals or a protocol-predefined scheme.

In an embodiment, the designated beam is the union of the beams designated by the m NES terminals.

In an embodiment, the number of times k may be determined according to Sub-IE #4 of each of the m NES terminals or a protocol-predefined scheme.

In an embodiment, the number of times k is the maximum of the numbers of times k requested by the m NES terminals.

In an embodiment, the delay may be determined according to Sub-IE #5 of each of the m NES terminals or a protocol-predefined scheme.

In an embodiment, the delay may be determined based on the latest transmission time of the downlink signal and/or downlink channel among the m NES terminals.

In an embodiment, based on the RO time-frequency resource configuration configured by a predefined RACH configuration, a specific preamble in a specific valid RO may be further configured for requesting the base station to send a downlink signal and/or downlink channel, where the downlink signal and/or downlink channel at least includes SSB and/or SIB1. The predefined RACH configuration may be RACH configuration #1 or RACH configuration #2. Based on the RO time-frequency resource configuration of RACH configuration #1 or RACH configuration #2, association periods included in an association pattern period are determined, valid ROs included in the association periods are determined, and a specific preamble in a specific valid RO is selected for requesting the base station to send a downlink signal and/or downlink channel. Sub-scheme 2-0-1 or Sub-scheme 2-0-2 may be used to select the specific valid RO. An example is as follows.

### Sub-scheme 2-0-1:

One or more association periods are selected every N2 association periods. The value of N2 may be configured; if it is not configured, a default value is used, such as 1.

One or more valid ROs are selected in each of the one or more association periods. The configured value indicates an index corresponding to a row in TS 38.321 Table 7.4-1.

In an embodiment, a mapping rule between a new value and selected valid ROs may be defined.

### Sub-scheme 2-0-2:

One or more association pattern periods are selected every N1 association pattern periods. The value of N1 is configured. If the value of N1 is not configured, a default value is used, such as 1.

In each of the one or more association pattern periods, one or more association periods are selected every N2 association periods. The value of N2 is configured; if the value of N2 is not configured, a default value is used, such as 1.

One or more valid ROs are selected in each of the one or more association periods. The configured value indicates an index corresponding to a row in TS 38.321 Table 7.4-1. In an embodiment, a new value and a mapping rule for selecting valid ROs may be defined.

In an embodiment, sub-scheme 2-0-3 may be used to select the specific preamble in the specific valid RO.

### Sub-scheme 2-0-3:

In each of the one or more specific valid ROs:
When m SSBs are associated with 1 valid RO and m ≥ 1, m*k preambles may be configured for requesting the base station to send a downlink signal and/or downlink channel, where each SSB has k preambles available for requesting the base station to send the downlink signal and/or downlink channel, and k is an integer greater than or equal to 1.

When m SSBs are associated with 1 valid RO and m < 1, k preambles may be configured for requesting the base station to send a downlink signal and/or downlink channel, where k is an integer greater than or equal to 1.

A starting index k1 for preambles used for requesting the base station to send the downlink signal and/or downlink channel is configured.

When m < 1, preambles with indices k1 to k1+k-1 are used for requesting the base station to send the downlink signal and/or downlink channel.

When m ≥ 1, for the i-th (i=0,1,...,m-1) SSB among the m SSBs, the preamble with index k1 + i*k is used for requesting the base station to send the downlink signal and/or downlink channel.

In an embodiment, a starting index value k0 is configured to determine that, within one RO, the k0-th to (k0+k-1)-th preambles among the N preambles associated with one SSB are used for requesting the base station to send SSB and/or SIB1.

In an embodiment, for each SSB, the starting index of the preambles used for requesting the base station to send the downlink signal and/or downlink channel is configured.

In an embodiment, the value of k may be configured; if it is not configured, k defaults to a default value, such as 1.

In an embodiment, the above configuration may be referred to as a request configuration.

In an embodiment, for example: in the selected association period, 16 valid ROs (valid RO #0,2,4,6,8,10,12,14,16,18,20,22,24,26,28,30) are selected, and one preamble is selected for each valid RO, i.e., a valid RO and preamble configuration for requesting the base station to send the downlink signal and/or downlink channel is configured.

In an embodiment, a specific preamble in a specific valid RO in the ROs configured by RACH configuration #1 is used to request the base station to send the downlink signal and/or downlink channel, where the downlink signal and/or downlink channel at least includes SSB and/or SIB1. When the specific valid RO and specific preamble are used for random access of a legacy terminal and used for an NES terminal requesting the base station to send the downlink signal and/or downlink channel, the base station may receive the same preamble and may be unable to determine whether it is used for the random access of the legacy terminal or for the NES terminal requesting the base station to send the downlink signal and/or downlink channel. The following options may be used to determine the purpose of the received preamble.

Option 1: the NES base station only allows the NES terminal to access. When the NES base station receives the specific preamble on the specific valid RO, the base station determines that the signal is used for the NES terminal to request the base station to send a downlink signal and/or downlink channel.

Option 2: the NES base station allows both the NES terminal and the legacy terminal to access. Whether the specific preamble on the specific valid RO is used to request the base station to send the downlink signal and/or downlink channel is indicated via MSG3 in 4-step random access or MSGA in 2-step random access.

In an embodiment, the request configuration may also have the following usages.

Sub-scheme #2-1: the signal combination of included in the downlink signal and/or downlink channel are indicated by protocol pre-definition, base station higher layer signaling configuration, SIB1 configuration, or dynamic indication.

Multiple request configurations may be configured, where one request configuration corresponds to one signal combination, enabling the requesting signals to request the base station to send different combinations in the signal combinations.

In an embodiment, when only one request configuration is configured, the UE requests Combination #1 (SSB and SIB1) or a predefined downlink signal and/or downlink channel.

Sub-scheme #2-2: different request configurations may be used to distinguish whether the requested SSB is a simplified SSB (e.g., simplified SSB includes only PSS and SSS signals) and/or whether SIB1 and/or SIBn and/or other common information is transmitted only when there is a change.

For example, 2 request configurations may distinguish case #1 and case #2.

Case #1: the requested SSB is a simplified SSB.

Case #2: the requested SSB is a regular SSB.

For example, 2 request configurations may distinguish case #3 and case #4:
Case #3: SIB1 and/or SIBn and/or other common information is transmitted only when there is a change.
Case #4: SIB1 and/or SIBn and/or other common information is transmitted when requested by the UE.

In an embodiment, when only one request configuration is configured, the UE requests a regular SSB, and SIB1 and/or SIBn and/or other common information is transmitted upon UE request, or the UE uses a predefined criterion.

Sub-scheme #2-3: the request configuration may be used to indicate indication information of the beam used by the base station for sending the downlink signal and/or downlink channel.

Option 1: the beam used for sending the downlink signal and/or downlink channel is the beam #m corresponding to MSG1 or MSGA.

Option 2: the beam used for sending the downlink signal and/or downlink channel includes beam #m corresponding to MSG1 or MSGA and valid beams among n beams before and after beam #m (n ≥ 0).

Option 3: the downlink signal and/or downlink channel is sent in all beam directions of the SSB.

3 request configurations may distinguish Option 1, Option 2, and Option 3.

The number of schemes for the used beam is not limited in this embodiment; different request configurations may be used to distinguish the schemes for the used beam.

In an embodiment, when only one request configuration is configured, Option 1 or a protocol-predefined scheme is used.

Sub-scheme #2-4: different request configurations may be used to distinguish the indication information of the number k of transmissions of the downlink signal and/or downlink channel requested from the base station.

The number k of transmissions may be determined based on the capability of the NES terminal, enabling the NES terminal to successfully detect the downlink signal and/or downlink channel with high probability.

The NES terminal reports the number k of transmissions or other information that may be used to determine the number k of transmissions.

In an embodiment, k may differ for different signals.

In an embodiment, the number k of transmissions refers to sending the requested downlink signal and/or downlink channel k times on each of the beams determined according to Sub-IE #3.

In an embodiment, when only one request configuration is configured, the requested downlink signal and/or downlink channel is sent once or a predefined number of times.

Sub-scheme #2-5: different request configurations may be used to distinguish the minimum interval between the time requesting the base station to send the downlink signal and/or downlink channel and the time sending the requesting signal.

The minimum interval may be determined based on the capability of the NES terminal, allowing the NES terminal sufficient preparation time.

The NES terminal reports the minimum time interval or other information that may be used to determine the minimum time interval.

Option 1: the minimum interval refers to a number of symbols between a last symbol of the requesting signal and a first symbol of the downlink signal and/or downlink channel sent by the base station for the first time.

Option 2: the minimum interval refers to a number of slots between a slot of the requesting signal and a slot where the base station sends the downlink signal and/or downlink channel for the first time.

In an embodiment, when only one request configuration is configured, Option 2 or a protocol-predefined scheme is used.

In an embodiment of the disclosure, in this embodiment, sub-scheme #2-1, sub-scheme #2-2, sub-scheme #2-3, sub-scheme #2-4, and/or sub-scheme #2-5 may be enabled via other configuration information, which is not limited in this disclosure.

In an embodiment of the disclosure, after receiving a preamble as a request signal, the base station, based on the request configuration corresponding to the request signal, after a certain delay, sends, in a specified beam direction, k times the downlink signal and/or channel signal that the NES terminal expects to obtain. The downlink signal and/or channel may be determined according to sub-scheme #2-1 and/or sub-scheme #2-2, or according to a protocol-predefined scheme; the specified beam may be determined according to sub-scheme #2-3 or a protocol-predefined scheme; the number k may be determined according to sub-scheme #2-4 or a protocol-predefined scheme; the delay may be determined according to sub-scheme #2-5 or a protocol-predefined scheme.

In an embodiment of the disclosure, after receiving the preamble as a request signal, the base station may stop the random access procedure.

At this time, the NES terminal does not expect to receive MSG 2 or MSG B.

In an embodiment of the disclosure, the base station may send an acknowledgement reply to the request signal of the NES terminal via other information.

In an embodiment of the disclosure, after receiving the preamble as a request signal, the base station may continue the random access procedure.

In an embodiment of the disclosure, during the subsequent random access procedure, the base station may send an acknowledgement reply to the request signal of the NES terminal.

In an embodiment of the disclosure, a new information element is added in MSG 2 in a 4-step random access procedure or MSG B in a 2-step random access procedure includes to notify the NES terminal that the downlink signal and/or channel request are received.

In an embodiment of the disclosure, the base station may send an acknowledgement reply to the request signal of the NES terminal via other information.

In an embodiment of the disclosure, after receiving preambles as request signals from m NES terminals, the base station, after a certain delay, sends, in a specified beam direction, k1 times the downlink signals and/or channels that the m NES terminals expect to obtain, where m is greater than or equal to 1.

In an embodiment of the disclosure, the downlink signal and/or channel may be determined according to sub-scheme #2-1 and/or sub-scheme #2-2 for each of the m NES terminals, or according to a protocol-predefined scheme.

In an embodiment of the disclosure, the downlink signal and/or channel is the union of the downlink signals and/or downlink channels requested by the m NES terminals.

In an embodiment of the disclosure, the specified beam may be determined according to sub-scheme #2-3 for each of the m NES terminals, or according to a protocol-predefined scheme.

In an embodiment of the disclosure, the specified beam is the union of the beams specified by the m NES terminals.

In an embodiment of the disclosure, the number k may be determined according to sub-scheme #2-4 for each of the m NES terminals, or according to a protocol-predefined scheme.

In an embodiment of the disclosure, the number k is the maximum value of the numbers of times requested by the m NES terminals.

In an embodiment of the disclosure, the delay may be determined according to sub-scheme #2-5 for each of the m NES terminals, or according to a protocol-predefined scheme.

In an embodiment of the disclosure, the delay is determined based on the latest transmission time of the downlink signal and/or downlink channel among the m NES terminals.

In an embodiment of the disclosure, the base station configures RACH configuration #1 for random access, and o configures RACH configuration #2 for requesting the downlink signal and/or downlink channel from the base station. The downlink signal and/or channel at least includes sending SSB and/or SIB1, and includes at least the following configuration scenarios.

In an embodiment of the disclosure, the time-frequency positions of the RO in RACH configuration #2 are different from those of the RO in RACH configuration #1.

Sub-scheme 3-1-1: the RO configured by RACH configuration #2 has the same time-domain position as the RO configured by RACH configuration #1, and has a frequency-domain position different from that of the RO configured by RACH configuration #1.

Option 1: the frequency-domain position of the RO configured by RACH configuration #2 is independently configured.

Option 2: the frequency-domain position of the RO configured by RACH configuration #2 is obtained by adding an offset #1 to the frequency-domain position of the RO configured by RACH configuration #1, and other information of the RO configured by RACH configuration #2 may be obtained based on RACH configuration #1.

Sub-scheme 3-1-2: the RO configured by RACH configuration #2 has a time-domain position different from that of the RO configured by RACH configuration #1, and has the same frequency-domain position as the RO configured by RACH configuration #1.

Option 1: the time-domain position of the RO configured by RACH configuration #2 is independently configured.

Option 2: the time-domain position of the RO configured by RACH configuration #2 is obtained by adding an offset #2 to the time-domain position of the RO configured by RACH configuration #1, and other information of the RO configured by RACH configuration #2 may be obtained based on RACH configuration #1.

Sub-scheme 3-1-3: the RO configured by RACH configuration #2 has a different time-domain position and a different frequency-domain position from the RO configured by RACH configuration #1.

Option 1: the time-domain position and frequency-domain position of the RO configured by RACH configuration #2 are independently configured;
Option 2: the frequency-domain position of the RO configured by RACH configuration #2 is obtained by adding an offset #1 to the frequency-domain position of the RO configured by RACH configuration #1, and the time-domain position is obtained by adding an offset #2 to the time-domain position of the RO configured by RACH configuration #1, and other information of the RO configured by RACH configuration #2 may be obtained based on RACH configuration #1.

In an embodiment of the disclosure, the time-frequency positions of ROs in RACH configuration #2 for requesting downlink signals and/or channels are exactly the same as the time-frequency positions of ROs in RACH configuration #1 for random access:
Sub-scheme 3-1-4: a preamble used in RACH configuration #2 is different from that in RACH configuration #1. RACH configuration #2 configures a preamble starting index and a number of preambles used in the RO for requesting the base station to send the downlink signal and/or downlink channel.

In an embodiment of the disclosure, the preamble starting index used in the RO configured by RACH configuration #2 is adjacent to the preamble maximum index used in the RO configured by RACH configuration #1.

In an embodiment of the disclosure, in sub-schemes 3-1-1, 3-1-2, 3-1-3, the RO for random access are different from the RO for requesting the base station to send downlink signal and/or downlink channel, and whether the preamble for random access is the same as the preamble for requesting the base station to send the downlink signal and/or downlink channel is not restricted.

In an embodiment of the disclosure, in sub-scheme 3-1-4, the RO for random access may be the same as the RO for requesting the base station to send downlink signal and/or downlink channel, but the preamble for random access is different from the preamble for requesting the base station to send the downlink signal and/or downlink channel.

In an embodiment of the disclosure, the mapping relationship between SSBs and valid ROs is mapping relationship #1 in RACH configuration #1, and the mapping relationship between SSBs and valid ROs is mapping relationship #2 in RACH configuration #2.

When mapping relationship #1 and mapping relationship #2 are different, mapping relationship #2 of RACH configuration #2 is independently configured.

When mapping relationship #1 and mapping relationship #2 are the same, mapping relationship #2 is not necessarily to be configured in RACH configuration #2.

In an embodiment of the disclosure, the above are configuration examples of RO time-frequency position configuration #2 and SSB-to-valid-RO mapping relationship #2, and the embodiments of the present disclosure are not limited to this.

In an embodiment of the disclosure, the mapping between SSBs and valid ROs in RACH configuration #2 is determined according to the RO time-frequency position configuration in RACH configuration #2 and the mapping relationship #2 of SSB to valid RO.

In an embodiment of the disclosure, one configuration of RO time-frequency positions for RACH configuration #2 is as follows. The time domain position of RO in RACH configuration #2 is the same as the time domain position of RO in RACH configuration #1, and they are frequency-division multiplexed in the frequency domain.

The method in the above embodiment can be used to determine, among the configured ROs in RACH configuration #2, the valid RO and preamble that are actually used for requesting the base station to send the downlink signal and/or downlink channel, i.e., the request configuration is determined. The request configuration can also implement the functions in sub-scheme #2-1, sub-scheme #2-2, sub-scheme #2-3, sub-scheme #2-4, and sub-scheme #2-5 of the second embodiment.

In an embodiment, one or more functions among sub-schemes #2-1, #2-2, #2-3, #2-4, #2-5 of the above embodiments may be enabled through other configuration information, which is not limited in this disclosure.

In an embodiment, after receiving a preamble as a requesting signal, the base station, according to the request configuration corresponding to the requesting signal, sends the downlink signal and/or downlink channel signal requested by the NES terminal k times on the designated beam direction after a certain delay. The downlink signal and/or downlink channel may be determined according to sub-scheme #2-1 and/or sub-scheme #2-2, or according to a protocol-predefined scheme; the designated beam may be determined according to sub-scheme #2-3 or a protocol-predefined scheme; the number of times k may be determined according to sub-scheme #2-4 or a protocol-predefined scheme; the delay may be determined according to sub-scheme #2-5 or a protocol-predefined scheme.

In an embodiment, after receiving a preamble as a requesting signal, the base station may stop the random access process.

At this time, the NES terminal does not expect to receive MSG2 or MSGB.

In an embodiment, the base station may send an acknowledgement reply to the requesting signal of the NES terminal via other information.

In an embodiment, after receiving a preamble as a requesting signal, the base station may continue the random access process.

In an embodiment, in the subsequent random access process, the base station may send an acknowledgement reply to the requesting signal of the NES terminal.

In an embodiment, a new information element is added in MSG2 in 4-step random access or MSGB in 2-step random access to notify the NES terminal that the downlink signal and/or downlink channel request are received.

In an embodiment, the base station may send an acknowledgement reply to the requesting signal of the NES terminal via other information.

In an embodiment, after receiving preambles as requesting signals from m NES terminals, the base station, after a certain delay, sends the downlink signal and/or downlink channel requested by the m NES terminals k1 times on the designated beam direction, where m ≥ 1.

In an embodiment, the downlink signal and/or downlink channel may be determined according to sub-scheme #2-1 and/or sub-scheme #2-2 of each of the m NES terminals, or according to a protocol-predefined scheme.

In an embodiment, the downlink signal and/or downlink channel is the union of the downlink signals and/or downlink channels requested by the m NES terminals.

In an embodiment, the designated beam may be determined according to sub-scheme #2-3 of each of the m NES terminals or a protocol-predefined scheme.

In an embodiment, the designated beam is the union of the beams designated by the m NES terminals.

In an embodiment, the number of times k may be determined according to sub-scheme #2-4 of each of the m NES terminals or a protocol-predefined scheme.

In an embodiment, the number of times k is the maximum of the numbers of times k requested by the m NES terminals.

In an embodiment, the delay may be determined according to sub-scheme #2-5 of each of the m NES terminals or a protocol-predefined scheme.

In an embodiment, the delay may be determined based on the latest transmission time of the downlink signal and/or downlink channel among the m NES terminals.

In an embodiment, the base station configures RACH configuration #1 for random access. Based on the RO time-frequency position configured by RACH configuration #1 and the mapping relationship #1 of SSB to valid RO, valid ROs are determined from the ROs configured by RACH configuration #1. Further, the valid RO and preamble used for random access in the association pattern period may be determined. There may be one or more valid ROs in the association pattern period where part or all of the preambles are not mapped to SSBs and are not used for random access, as shown in FIG. 2E for valid ROs without SSB mapping.

In an embodiment, after completing the mapping of SSBs to valid ROs and preambles in the association pattern period, valid ROs where part or all preambles are not used for random access may be called residual valid ROs, and preambles in residual valid ROs that are not used for random access may be called residual preambles. The mapping of SSBs to residual valid ROs may use the following methods:
Option 1: the mapping relationship #1 of SSB to valid RO may be used for mapping SSBs to residual valid ROs, or
Option 2: an additional mapping relationship #2 of SSB to valid RO may be configured for mapping SSBs to residual valid ROs.

In an embodiment, only residual valid ROs where all preambles are residual preambles are selected for mapping to SSBs.

In an embodiment, mapping relationships in Option 1 or Option 2 may be used for mapping.

In an embodiment, in Option 1 and Option 2, only residual preambles in residual valid ROs is able to participate in SSB mapping.

In an embodiment, the above mapping of SSBs to residual valid ROs and residual preambles is an example. The implementation of mapping SSBs to residual valid ROs and residual preambles is not limited in this disclosure. In an embodiment, an association period #2 is determined. In this association period #2, each of all SSBs may be mapped to a residual valid RO and a residual preamble at least once.

In an embodiment, an association pattern period #2 is determined. The association pattern period #2 includes N2 association periods #2, enabling the duration of the pattern for mapping SSB to valid RO not to exceed Z ms, where N2 ≥ 1. Here, Z is a protocol default value or a higher layer configured value, such as 160.

In an embodiment, using the methods in the above embodiments, the valid ROs and preambles among the configured ROs in the association pattern period #2 that are actually used for requesting the base station to send the downlink signal and/or downlink channel are determined, i.e., the request configuration is determined. The downlink signal and/or downlink channel at least includes SSB and/or SIB1. The request configuration may also implement the functions in sub-schemes #2-1, #2-2, #2-3, #2-4, #2-5 of the second embodiment.

In an embodiment, one or more functions among sub-schemes #2-1, #2-2, #2-3, #2-4, #2-5 may be enabled through other configuration information, which is not limited in this disclosure.

In an embodiment, after receiving a preamble as a requesting signal, the base station, according to the request configuration corresponding to the requesting signal, sends the downlink signal and/or downlink channel signal requested by the NES terminal k times on the designated beam direction after a certain delay. The downlink signal and/or downlink channel may be determined according to sub-scheme #2-1 and/or sub-scheme #2-2, or according to a protocol-predefined scheme; the designated beam may be determined according to sub-scheme #2-3 or a protocol-predefined scheme; the number of times k may be determined according to sub-scheme #2-4 or a protocol-predefined scheme; the delay may be determined according to sub-scheme #2-5 or a protocol-predefined scheme.

In an embodiment, after receiving a preamble as a requesting signal, the base station may stop the random access process.

At this time, the NES terminal does not expect to receive MSG2 or MSGB.

In an embodiment, the base station may send an acknowledgement reply to the requesting signal of the NES terminal via other information.

In an embodiment, after receiving a preamble as a requesting signal, the base station may continue the random access process.

In an embodiment, in the subsequent random access process, the base station may send an acknowledgement reply to the requesting signal of the NES terminal.

In an embodiment, a new information element is added in MSG2 in 4-step random access or MSGB in 2-step random access to notify the NES terminal that the downlink signal and/or downlink channel request are received.

In an embodiment, the base station may send an acknowledgement reply to the requesting signal of the NES terminal via other information.

In an embodiment, after receiving preambles as requesting signals from m NES terminals, the base station, after a certain delay, sends the downlink signal and/or downlink channel requested by the m NES terminals k1 times on the designated beam direction, where m ≥ 1.

In an embodiment, the downlink signal and/or downlink channel may be determined according to sub-scheme #2-1 and/or sub-scheme #2-2 of each of the m NES terminals, or according to a protocol-predefined scheme.

In an embodiment, the downlink signal and/or downlink channel is the union of the downlink signals and/or downlink channels requested by the m NES terminals.

In an embodiment, the designated beam may be determined according to sub-scheme #2-3 of each of the m NES terminals or a protocol-predefined scheme.

In an embodiment, the designated beam is the union of the beams designated by the m NES terminals.

In an embodiment, the number of times k may be determined according to sub-scheme #2-4 of each of the m NES terminals or a protocol-predefined scheme.

In an embodiment, the number of times k is the maximum of the numbers of times k requested by the m NES terminals.

In an embodiment, the delay may be determined according to sub-scheme #2-5 of each of the m NES terminals or a protocol-predefined scheme.

In an embodiment, the delay may be determined based on the latest transmission time of the downlink signal and/or downlink channel among the m NES terminals.

In an embodiment, considering the importance of requesting the base station to send a downlink signal and/or downlink channel, where the downlink signal and/or downlink channel at least includes SSB and/or SIB1, when using a PRACH signal as the requesting signal, in the above multiple embodiments, method a or b may be used to make the power of the PRACH signal sufficiently large, improving the probability of successful reception of the PRACH signal acting as the requesting signal.

Method a: compared to a PRACH signal not used as the requesting signal, at least one of the following parameters may be differentially configured to make the transmit power of the PRACH signal used as the requesting signal sufficiently large: preambleReceivedTargetPower; or preamble powerRampingStep.

Method b: it may be enabled through configuration or protocol default that when a PRACH signal is used as a request, it is sent with full power.

The power difference between MSG3 or MSGA and the PRACH signal is deltaPreamble #1 or deltaPreamble #2. When using MSG3 or MSGA as the requesting signal, in the above multiple embodiments, method a or b may be enabled to make the power of the PRACH signal sufficiently large, thereby making the transmit power of MSG3 or MSGA as the requesting signal sufficiently large. Method c or d may also be used to make the transmit power of MSG3 or MSGA as the requesting signal sufficiently large.

Method c: compared to MSG3 or MSGA not used as the requesting signal, deltaPreamble #1 or deltaPreamble #2 may be differentially configured to make the power of MSG3 or MSGA when used as a requesting signal sufficiently large.

Method d: it may be enabled through configuration or protocol default that when MSG3 or MSGA is used as a request, it is sent with full power.

When the requesting signal is MSG3 or MSGA, method a combined with method c, or method b combined with method c may also be used to make the transmit power of MSG3 or MSGA used as a requesting signal sufficiently large.

In an embodiment, when the NES terminal is in an RRC-CONNECTED state, the NES terminal may send a requesting signal to a first cell, the requesting signal requesting a second cell to send the requested downlink signal and/or downlink channel.

One possible scenario is: when the NES terminal is in an RRC-CONNECTED state, the NES terminal may access an anchor cell. The NES terminal sends a requesting signal to the anchor cell, requesting a non-anchor cell to send information such as the downlink signal and/or downlink channel.

One possible scenario is: when the NES terminal is in an RRC-CONNECTED state, the NES terminal may be in a CA state. The NES terminal sends a requesting signal to a Primary Cell (PCell) or a Primary Secondary Cell (PsCell) or a Secondary Primary Cell (sPcell), requesting as Secondary Cell (SCell) to send information such as the downlink signal and/or downlink channel. In an embodiment, the PCell or PsCell or sPcell is non-quasi-co-located with the Scell.

In an embodiment, whether the cell receiving the requesting signal, after receiving the requesting signal, is the same as the cell that sends the downlink signal and/or downlink channel requested by the NES terminal is not limited.

In an embodiment, any of the methods in the above embodiments may be performed by an NES terminal in any state, such as a CONNECTED terminal, an IDLE terminal, or ab INACTIVE terminal.

In an embodiment, when the request-related configuration (e.g., time-frequency location of the requesting signal, available preambles, etc.) is determined via RRC signaling, the configuration is retained when the terminal enters the IDLE state or INACTIVE state, and the terminal may still send the requesting signal according to the configuration. Correspondingly, the base station may detect and receive the requesting signal at the corresponding resource location according to the configuration and perform the corresponding actions.

In the embodiments of the present disclosure, part or all of the steps, and their optional implementations, may be arbitrarily combined with part or all of the steps in other embodiments, and may also be arbitrarily combined with optional implementations of other embodiments.

An embodiment of the present disclosure also proposes an apparatus for implementing any of the above methods. For example, an apparatus is disclosed, comprising units or modules for executing the steps performed by the terminal in any of the above methods. As another example, another apparatus is disclosed, comprising units or modules for executing the steps performed by the network device (e.g., an access network device, a core network function node, a core network device, etc.) in any of the above methods.

It should be understood that the division of units or modules in the above apparatuses is merely a logical functional division, and in actual implementation, they may be fully or partially integrated into one physical entity, or physically separated. Furthermore, the units or modules in the apparatuses may be implemented in the form of a processor calling software. For example, the apparatus includes a processor, the processor is connected to a memory, the memory stores instructions, and the processor calls the instructions stored in the memory to implement any of the above methods or to implement the functions of the units or modules of the above apparatus, wherein the processor is, for example, a general-purpose processor, such as a Central Processing Unit (CPU) or a microprocessor, and the memory is a memory within the apparatus or a memory external to the apparatus. Or, the units or modules in the apparatus may be implemented in the form of hardware circuits, and the functions of part or all of the units or modules may be achieved through the design of the hardware circuit. The hardware circuit may be understood as one or more processors. For example, in an implementation, the hardware circuit is an Application-Specific Integrated Circuit (ASIC), and the functions of part or all of the units or modules are implemented through the design of the logical relationships of the circuit elements. For another example, in another implementation, the hardware circuit may be implemented via a Programmable Logic Device (PLD), taking a Field Programmable Gate Array (FPGA) as an example, which may include a large number of logic gate circuits, and the connection relationships between the logic gate circuits are configured via configuration files to achieve the functions of part or all of the units or modules. All units or modules of the above apparatus may be implemented entirely in the form of a processor calling software, or entirely in the form of a hardware circuit, or partly in the form of a processor calling software and the remainder in the form of a hardware circuit.

In embodiments of the present disclosure, a processor is a circuit with signal processing capability. In one implementation, the processor may be a circuit with an instruction reading and execution capability, such as a Central Processing Unit (CPU), a microprocessor, a Graphics Processing Unit (GPU) (which may be understood as a microprocessor), or a Digital Signal Processor (DSP). In another implementation, the processor may implement a certain function through the logical relationships of hardware circuits. The logical relationships of the hardware circuits are fixed or configurable. For example, the processor is an ASIC or a hardware circuit implemented by a PLD, such as an FPGA. In a reconfigurable hardware circuit, a process of the processor loading a configuration document to configure the hardware circuit may be understood as a process of the processor loading instructions to implement the functions of part or all of the units or modules. Furthermore, it may be a hardware circuit designed for artificial intelligence, which may be understood as an ASIC, such as a Neural Network Processing Unit (NPU), a Tensor Processing Unit (TPU), a Deep Learning Processing Unit (DPU), etc.

FIG. 7A is a schematic diagram of a terminal according to an embodiment of the present disclosure. As shown in FIG. 7A, a terminal 7100 may include: a transceiver module 7101 configured to determine that a network device is in a Network Energy Saving (NES) state, and send first indication information to the network device via at least one of: sending the first indication information to the network device based on a Physical Random Access Channel (PRACH) signal; or sending the first indication information to the network device based on another signal in random access, wherein the first indication information is configured to request a downlink signal and/or a downlink channel. In an embodiment, the transceiver module 7101 is configured to execute at least one of the communication steps as sending and receiving steps (e.g., steps S3102 and S3104, but not limited thereto) performed by the terminal 101 in any of the above methods, which is not repeated here.

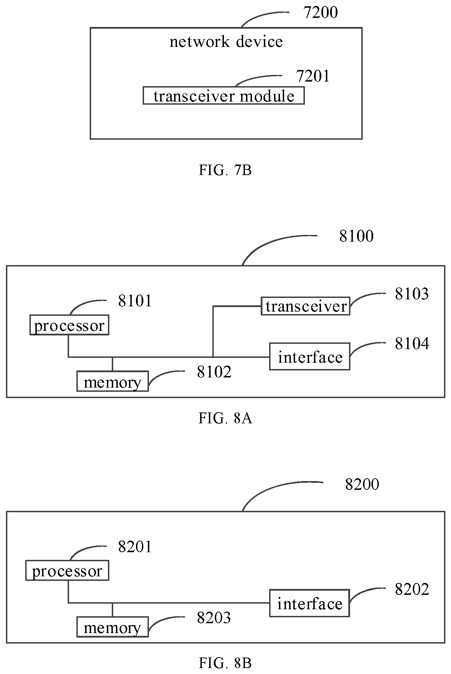

FIG. 7B is a schematic diagram of a network device according to an embodiment of the present disclosure. As shown in FIG. 7B, a network device 7200 may include: a transceiver module 7201. In some embodiments, the transceiver module is configured to receive first indication information sent by a terminal via at least one of: receiving the first indication information sent by the terminal based on a Physical Random Access Channel (PRACH) signal; or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel. The transceiver module is further configured to send the downlink signal and/or downlink channel corresponding to the first indication information to the terminal.

In some embodiments, the transceiver module may include a sending module and/or a receiving module, which may be separate or integrated. In an embodiment, the transceiver module may be interchanged with a transceiver.

In some embodiments, the processing module may be one module or may include multiple sub-modules. In an embodiment, the multiple sub-modules respectively execute all or part of the steps required to be executed by the processing module. In an embodiment, the processing module may be interchanged with a processor.

FIG. 8A is a schematic diagram of a communication device 8100 according to an embodiment of the present disclosure. The communication device 8100 may be a network device (e.g., an access network device, a core network device, etc.), or a terminal (e.g., user equipment, etc.), or a chip, a chip system, or a processor supporting the network device to implement any of the above methods, or a chip, a chip system, or a processor supporting the terminal to implement any of the above methods. The communication device 8100 may be used to implement the methods described in the above method embodiments, and details may be found in the description of the above method embodiments.

As shown in FIG. 8A, the communication device 8100 includes one or more processors 8101. The processor 8101 may be a general-purpose processor or a special-purpose processor, for example, a baseband processor or a central processing unit. The baseband processor may be used to process communication protocols and communication data, and the central processor may be used to control a communication device (e.g., a base station, a baseband chip, a terminal, a terminal chip, a DU, or a CU, etc.), execute programs, and process program data. The communication device 8100 is used to execute any of the above methods.

In some embodiments, the communication device 8100 further includes one or more memories 8102 for storing instructions. In an embodiment, all or part of the memories 8102 may be located outside the communication device 8100.

In some embodiments, the communication device 8100 further includes one or more transceivers 8103. When the communication device 8100 includes one or more transceivers 8103, the transceiver 8103 performs at least one of the communication steps such as sending and receiving steps (e.g., steps S3101, S3102, S3104, S3105, S3106, but not limited thereto) in the above methods, and the processor 8101 executes at least one of the other steps (e.g., step S3103, but not limited thereto).

In some embodiments, a transceiver may include a receiver and/or a transmitter, which may be separate or integrated. In an embodiment, terms such as transceiver, transceiver unit, transceiver machine, transceiver circuit, etc., may be interchanged. Terms such as transmitter, transmitting unit, transmitting machine, transmitting circuit, etc., may be interchanged. Terms such as receiver, receiving unit, receiving machine, receiving circuit, etc., may be interchanged.

In some embodiments, the communication device 8100 may include one or more interface circuits 8104. In an embodiment, the interface circuit 8104 is connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited to FIG. 8A. The communication device may be an independent device or part of a larger device. For example, the communication device may be: (1) an independent integrated circuit IC, or chip, or chip system, or subsystem; (2) a set of one or more ICs, In an embodiment, the set of one or more ICs may also include a storage component for storing data and programs; (3) an ASIC, such as a modem; (4) a module that may be embedded in other devices; (5) a receiver, a terminal, a smart terminal, a cellular phone, a wireless device, a handset, a mobile unit, an in-vehicle device, a network device, a cloud device, an artificial intelligence device, etc.; (6) others, etc.

FIG. 8B is a schematic diagram of a chip 8200 according to an embodiment of the present disclosure. For the case where the communication device 8100 may be a chip or a chip system, reference may be made to the schematic diagram of the chip 8200 shown in FIG. 8B, but is not limited thereto.

The chip 8200 includes one or more processors 8201, and the chip 8200 is used to execute any of the above methods.

In some embodiments, the chip 8200 also includes one or more interface circuits 8202. In an embodiment, the interface circuit 8202 is connected to a memory 8203. The interface circuit 8202 may be used to receive signals from the memory 8203 or other devices, and may be used to send signals to the memory 8203 or other devices. For example, the interface circuit 8202 may read instructions stored in the memory 8203 and send the instructions to the processor 8201.

In some embodiments, the interface circuit 8202 executes at least one of the communication steps, such as sending and/or receiving steps (e.g., steps S3101, S3102, S3104, S3105, S3106, but not limited thereto) in the above methods, and the processor 8201 executes at least one of the other steps (e.g., step S3103, but not limited thereto).

In some embodiments, terms such as interface circuit, interface, transceiver pin, transceiver, etc., may be interchanged.

In some embodiments, the chip 8200 further includes one or more memories 8203 for storing instructions. In an embodiment, all or part of the memories 8203 may be located outside the chip 8200.

The present disclosure also proposes a storage medium having instructions stored thereon that, when executed on the communication device 8100, cause the communication device 8100 to perform any of the above methods. In an embodiment, the storage medium is an electronic storage medium. In an embodiment, the storage medium is a computer-readable storage medium, but is not limited thereto, and may be a storage medium readable by other devices. In an embodiment, the storage medium may be a non-transitory storage medium, but is not limited thereto, and may be a transitory storage medium.

The present disclosure also proposes a program product that, when executed by the communication device 8100, causes the communication device 8100 to perform any of the above methods. In an embodiment, the program product is a computer program product.

The present disclosure also proposes a computer program that, when executed on a computer, causes the computer to perform any of the above methods.

## Claims

1. A method for sending indication information, performed by a terminal, comprising:
determining that a network device is in a Network Energy Saving (NES) state, and sending first indication information to the network device via at least one of: sending the first indication information to the network device based on a Physical Random Access Channel (PRACH) signal; or sending the first indication information to the network device based on another signal in random access,
wherein the first indication information is configured to request a downlink signal and/or a downlink channel.

2. The method according to claim 1, wherein sending the first indication information to the network device based on another signal in random access comprises:
sending a first random access request to the network device, wherein the first random access request comprises an information element, and the information element is configured to request the downlink signal and/or the downlink channel.

3. The method according to claim 2, wherein sending the first random access request to the network device comprises:
in 4-step random access, sending a message 3 (MSG3) scheduled by a Random Access Response (RAR) to the network device, wherein the MSG3 carries the information element.

4. The method according to claim 2, wherein sending the first random access request to the network device comprises:
in 2-step random access, sending a message A (MSGA) to the network device, wherein the MSGA carries the information element.

5. The method according to claim 3 or 4, wherein the information element comprises at least one of:
a first bit, wherein the first bit indicates requesting the network device to send a Synchronization Signal and physical broadcast channel block (SSB) and a System Information Block 1 (SIB1);
a second bit, wherein the second bit indicates requesting the network device to send at least one of an SSB or an SIB1;
second indication information, wherein the second indication information indicates at least one of: whether a requested SSB is a simplified SSB; or whether system information and/or other common signals are transmitted only when there is a change, wherein the system information comprises at least one of an SIB1 or a System Information Block n (SIBn), and the other common signals are common signals other than the SIB1 and the SIBn, n being a positive integer greater than 1;
third indication information, wherein the third indication information indicates a beam used by the network device to send the downlink signal and/or the downlink channel;
fourth indication information, wherein the fourth indication information indicates a number of transmissions of the downlink signal and/or the downlink channel sent by the network device; or
fifth indication information, wherein the fifth indication information indicates a minimum time interval between a reception time point for receiving the downlink signal and/or the downlink channel and a transmission time point of the first indication information.

6. The method according to claim 5, wherein the information element comprises the third indication information, and the third indication information indicates at least one of:
in 4-step random access, the beam used by the network device being a first beam corresponding to an MSG3;
in 2-step random access, the beam used by the network device being a second beam corresponding to an MSGA;
in 4-step random access, the beam used by the network device comprising the first beam corresponding to a first beam index and valid beams among n beams before and after the first beam index, wherein n is an integer greater than or equal to zero;
in 2-step random access, the beam used by the network device comprising the second beam corresponding to a second beam index and valid beams among n beams before and after the second beam index; or
in 4-step random access or 2-step random access, a direction of the beam used by the network device comprises all beam directions of SSB.

7. The method according to claim 2, wherein sending the first indication information to the network device based on another signal in random access comprises:
sending a second random access request to the network device, wherein the second random access request comprises a specific preamble in a specific valid transmission occasion (valid RO), and the specific preamble is configured to request the downlink signal and/or the downlink channel.

8. The method according to claim 7, wherein the specific valid transmission occasion comprises all transmission occasions or part of transmission occasions.

9. The method according to claim 8, further comprising:
selecting one first association period every N2 association periods, and selecting one or more valid ROs in the first association period, wherein N2 is a positive integer greater than or equal to 1; and
selecting one association pattern period every N1 association pattern periods, selecting one second association period every N3 association periods within the one association pattern period, and selecting one or more valid ROs in the second association period, wherein N1 is a positive integer greater than or equal to 1, and N3 is a positive integer greater than or equal to 1.

10. The method according to claim 7, wherein the specific preamble comprises all preambles of or part of preambles within an RO.

11. The method according to claim 2, wherein sending the first indication information to the network device based on another signal in random access comprises:
sending the first indication information to the network device using a valid RO and a preamble in a second random access channel configuration (RACH configuration #2), wherein the RACH configuration #2 is configured by the network device for requesting the downlink signal and/or the downlink channel.

12. The method according to claim 11, wherein a time-frequency position of an RO in the second RACH configuration #2 is different from a time-frequency position of an RO in a first random access channel configuration (RACH configuration #1), and the first RACH configuration #1 is configured by the network device for random access.

13. The method according to claim 12, wherein the time-frequency positions being different comprises at least one of:
a time domain position of the RO in the second RACH configuration #2 being the same as a time domain position of the RO in the first RACH configuration #1, and a frequency domain position in the second RACH configuration #2 being different from a frequency domain position in the first RACH configuration #1;
a time domain position of the RO in the second RACH configuration #2 being different from a time domain position of the RO in the first RACH configuration #1, and a frequency domain position in the second RACH configuration #2 being the same as a frequency domain position in the first RACH configuration #1; or
a time domain position of the RO in the second RACH configuration #2 being different from a time domain position of the RO in the first RACH configuration #1, and a frequency domain position in the second RACH configuration #2 being different from a frequency domain position in the first RACH configuration #1.

14. The method according to claim 11, wherein a time-frequency position of an RO in the second RACH configuration #2 is the same as a time-frequency position of an RO in a first RACH configuration #1.

15. The method according to claim 14, wherein the time-frequency positions being the same comprises a preamble used in the second RACH configuration #2 being different from a preamble used in the first RACH configuration #1.

16. The method according to claim 2, wherein sending the first indication information to the network device based on another signal in random access comprises:
sending the first indication information to the network device using a specific preamble of a specific valid RO, wherein the specific valid RO is a RO among residual valid ROs in a first RACH configuration #1, the first RACH configuration #1 is configured by the network device for random access, and the residual valid ROs are valid ROs whose part of or all preambles are not used for random access after mapping valid ROs and preambles to SSBs in an association pattern period.

17. The method according to claim 16, wherein sending the first indication information to the network device comprises:
sending the first indication information to the network device using a specific preamble of a specific valid RO in a predefined third random access channel configuration (RACH configuration #3).

18. The method according to claim 1, wherein before sending the first indication information to the network device based on the PRACH signal, the method further comprises:
configuring the PRACH signal for sending the first indication information with at least one of the following parameters being different from that of a PRACH signal used for random access:
preamble target received power; or
preamble power ramping step.

19. The method according to claim 1, wherein sending the first indication information to the network device based on the PRACH signal comprises:
sending the first indication information to the network device using the PRACH signal for sending the first indication information at a full power.

20. The method according to claim 1, wherein sending the first indication information to the network device comprises:
the terminal being in a radio resource control-connected (RRC-CONNECTED) state, sending the first indication information to a first cell, wherein the first indication information is configured to request a second cell to send the requested downlink signal and/or the downlink channel.

21. The method according to any one of claims 1 to 20, wherein the downlink signal comprises at least one of:
an SSB;
an SIB1;
an SIBn, wherein n is a positive integer greater than 1; or
another common signal, wherein the other common signal is a common signal other than the SIB1 and the SIBn.

22. The method according to any one of claims 1 to 20, wherein the downlink channel comprises at least one of:
a Physical Broadcast Channel (PBCH);
a Physical Downlink Control Channel (PDCCH); or
a Physical Downlink Shared Channel (PDSCH).

23. The method according to any one of claims 1 to 22, further comprising:
receiving an indication signal sent by the network device, wherein the indication signal indicates whether the network device is in the NES state and/or a specific sub-state used when the network device is in the NES state and/or a specific sub-state used when the network device is in a non-NES state.

24. The method according to claim 23, wherein the specific sub-state used when the network device is in the NES state is a sub-state in a first sub-state set, the first sub-state set comprises at least one of:
a first sub-state, wherein the first sub-state is a state of not sending an SSB, not sending an SIB1, not sending an SIBn, and not sending another common signal, wherein n is a positive integer greater than 1;
a second sub-state, wherein the second sub-state is a state of not sending an SSB, sending an SIB1, not sending an SIBn, and not sending another common signal;
a third sub-state, wherein the third sub-state is a state of sending an SSB, not sending an SIB1, not sending an SIBn, and not sending another common signal;
a fourth sub-state, wherein the fourth sub-state is a state of not sending an SSB, not sending an SIB1, sending an SIBn, and not sending another common signal;
a fifth sub-state, wherein the fifth sub-state is a state of not sending an SSB, sending an SIB1, sending an SIBn, and not sending another common signal;
a sixth sub-state, wherein the sixth sub-state is a state of sending an SSB, not sending an SIB1, sending an SIBn, and not sending another common signal;
a seventh sub-state, wherein the seventh sub-state is a state of not sending an SSB, not sending an SIB1, not sending an SIBn, and sending another common signal;
an eighth sub-state, wherein the eighth sub-state is a state of not sending an SSB, sending an SIB1, not sending an SIBn, and sending another common signal;
a ninth sub-state, wherein the ninth sub-state is a state of sending an SSB, not sending an SIB1, not sending an SIBn, and sending another common signal;
a tenth sub-state, wherein the tenth sub-state is a state of not sending an SSB, not sending an SIB1, sending an SIBn, and sending another common signal;
an eleventh sub-state, wherein the eleventh sub-state is a state of not sending an SSB, sending an SIB1, sending an SIBn, and sending another common signal; or
a twelfth sub-state, wherein the twelfth sub-state is a state of sending an SSB, not sending an SIB1, sending an SIBn, and sending another common signal.

25. The method according to claim 23, wherein the specific sub-state used when the network device is in the non-NES state comprises:
a thirteenth sub-state, wherein the thirteenth sub-state is a state of sending an SSB, sending an SIB1, sending an SIBn (n>1), and sending another common signal.

26. The method according to any one of claims 23 to 25, wherein the indication signal comprises a first number of bits, the first number corresponds to a number of sub-states in the first sub-state set.

27. A method for receiving indication information, performed by a network device, comprising:
receiving first indication information sent by a terminal via at least one of: receiving the first indication information sent by the terminal based on a Physical Random Access Channel (PRACH) signal; or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel; and
sending the downlink signal and/or downlink channel corresponding to the first indication information to the terminal.

28. The method according to claim 27, wherein receiving the first indication information sent by the terminal based on another signal in random access comprises:
receiving a first random access request sent by the terminal, wherein the first random access request comprises an information element, and the information element is configured to request the downlink signal and/or the downlink channel.

29. The method according to claim 27, wherein receiving the first indication information sent by the terminal based on another signal in random access comprises:
receiving a second random access request sent by the terminal, wherein the second random access request comprises a specific preamble in a specific valid transmission occasion (valid RO), and the specific preamble is configured to request the downlink signal and/or the downlink channel.

30. The method according to claim 27, wherein receiving the first indication information sent by the terminal based on another signal in random access comprises:
receiving the first indication information sent by the terminal using a valid RO and a preamble in a second random access channel configuration (RACH configuration #2), wherein the RACH configuration #2 is configured by the network device for requesting the downlink signal and/or the downlink channel.

31. The method according to claim 27, wherein receiving the first indication information sent by the terminal based on another signal in random access comprises:
receiving the first indication information sent by the terminal using a specific preamble of a specific valid RO, wherein the specific valid RO is a RO among residual valid ROs in a first random access channel configuration (RACH configuration #1), and the first RACH configuration #1 is configured by the network device for random access.

32. The method according to claim 27, wherein receiving the first indication information sent by the terminal based on another signal in random access comprises:
receiving the first indication information sent by the terminal using a specific preamble of a specific valid RO in a predefined third random access channel configuration (RACH configuration #3).

33. The method according to claim 27, further comprising:
sending an indication signal to the terminal, wherein the indication signal indicates a sub-state used by the network device.

34. A terminal, comprising:
a transceiver module, configured to determine that a network device is in a Network Energy Saving (NES) state, and send first indication information to the network device via at least one of: sending the first indication information to the network device based on a Physical Random Access Channel (PRACH) signal; or sending the first indication information to the network device based on another signal in random access,
wherein the first indication information is configured to request a downlink signal and/or a downlink channel.

35. A network device, comprising:
a transceiver module, configured to receive first indication information sent by a terminal via at least one of: receiving the first indication information sent by the terminal based on a Physical Random Access Channel (PRACH) signal; or receiving the first indication information sent by the terminal based on another signal in random access, wherein the first indication information is sent by the terminal when the terminal determines that the network device is in a Network Energy Saving (NES) state, and is configured to request a downlink signal and/or a downlink channel,
wherein the transceiver module is further configured to send the downlink signal and/or downlink channel corresponding to the first indication information to the terminal.

36. A terminal, comprising:
one or more processors,
wherein the terminal is configured to execute the method for sending indication information according to any one of claims 1-26.

37. A network device, comprising:
one or more processors,
wherein the network device is configured to execute the method for receiving indication information according to any one of claims 27-33.

38. A communication system, comprising a terminal and a network device, wherein the terminal is configured to implement the method for sending indication information according to any one of claims 1-26, and the network device is configured to implement the method for receiving indication information according to any one of claims 27-33.

39. A storage medium for storing instructions that, when executed on a communication device, cause the communication device to execute the method for sending indication information according to any one of claims 1-26 or the method for receiving indication information according to any one of claims 27-33.
